(19) Europäisches Patentamt
European Patent Office
Office européen des brevets

(11) **EP 4 566 912 A1**

(12) **EUROPEAN PATENT APPLICATION**
published in accordance with Art. 153(4) EPC

(43) Date of publication:
**11.06.2025 Bulletin 2025/24**

(21) Application number: **23882180.5**

(22) Date of filing: **28.07.2023**

(51) International Patent Classification (IPC):
***B61L 27/12*** (2022.01)   ***G06Q 10/083*** (2024.01)
***G08G 1/123*** (2006.01)

(52) Cooperative Patent Classification (CPC):
**B61L 27/12; G06Q 50/40; G08G 1/123**

(86) International application number:
**PCT/JP2023/027782**

(87) International publication number:
**WO 2024/089964 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.10.2022 JP 2022171308**

(71) Applicant: **Hitachi, Ltd.**
**Tokyo 100-8280 (JP)**

(72) Inventors:
• **TANG, Eric Kui Shen**
**Tokyo 100-8280 (JP)**

• **UEDA, Shunsuke**
**Tokyo 100-8280 (JP)**
• **MAEKAWA, Yuki**
**Tokyo 100-8280 (JP)**
• **TESHIMA, Hisanori**
**Tokyo 100-8280 (JP)**
• **ADACHI, Shingo**
**Tokyo 100-8280 (JP)**

(74) Representative: **MERH-IP Matias Erny Reichl
Hoffmann
Patentanwälte PartG mbB
Paul-Heyse-Straße 29
80336 München (DE)**

(54) **OPERATION PLAN CREATION DEVICE, OPERATION PLAN CREATION SYSTEM, AND OPERATION PLAN CREATION METHOD**

(57) In order to improve passenger satisfaction with a transportation service and to provide an operation plan creation means capable of reducing operating costs for a transportation service provider, an operation plan creation device comprises: a transportation leg network generation unit that generates transportation leg network information that defines each transportation leg of the transportation service; a cancellation determination unit that generates transportation leg cancellation possibility information that indicates whether or not cancellation of each transportation leg of the transportation service is possible; a travel route candidate determination unit that generates travel route candidate information that indicates a travel route candidate for each travel plan in passenger travel plan information; a people flow prediction unit that generates people flow prediction information that indicates a predicted people flow in the transportation service; and an operation plan generation unit that generates new operation plan information in which certain transportation legs of the transportation service are eliminated.

EP 4 566 912 A1

**FIG. 2**

# OPERATION PLAN CREATION DEVICE 200

OPERATION PLAN CREATION DEVICE

**201**

MEMORY **201P**

OPERATION PLAN CREATION APPLICATION

TRANSPORTATION LEG NETWORK GENERATION UNIT **201P1**

CANCELLATION DETERMINATION UNIT **201P2**

TRAVEL ROUTE CANDIDATE DETERMINATION UNIT **201P3**

OPERATION PLAN CREATION UNIT **201P4**

PEOPLE FLOW PREDICTION UNIT **201P5**

EVALUATION AND VISUALIZATION UNIT **201P6**

STORAGE UNIT

EXISTING OPERATION PLAN INFORMATION **202D1**

MAINTENANCE INFORMATION **202D2**

CANCELLATION RULE INFORMATION **202D3**

TRAVEL PREFERENCE INFORMATION **202D4**

PASSENGER TRAVEL PLAN INFORMATION **202D5**

TRANSPORTATION LEG NETWORK INFORMATION **202D6**

TRANSPORTATION LEG CANCELLATION POSSIBILITY INFORMATION **202D7**

TRAVEL ROUTE CANDIDATE INFORMATION **202D8**

NEW OPERATION PLAN INFORMATION **202D9**

UNSATISFIED DEMAND INFORMATION **202D10**

PEOPLE FLOW PREDICTION INFORMATION **202D11**

CPU **203**

DISPLAY UNIT **204**

**202**

COMMUNICATION UNIT **205**

**350**

**Description**

[Technical Field]

The present invention relates to an operation plan creation device, an operation plan creation system, and an operation plan creation method.

[Background Art]

In railway transportation services, operation plans are used to manage departure and arrival times of trains in railway networks in consideration of operating costs and demands. Creation of the operation plans in the related art is manually performed by railway operators in consideration of infrastructures of the railway networks and needs of travelers.
It is important to accurately predict demands for the railway services and traveling of passengers (from where to where the passengers travel) in order to generate reliable operation plans.
For example, Japanese Patent Laid-Open Publication No. 2019-73146 (Patent Literature 1) is present as a means for creating a timetable representing a train control objective on the basis of prediction of travel demands.
Patent Literature 1 describes a technology of "an objective timetable creation device 100 that changes a timetable representing a train control objective in accordance with a result of predicting travel demands indicating destinations of passengers at each station where trains stop and the number thereof in each period of time, the objective timetable creation device 100 including: a violation part extraction program P01a that calculates degrees of congestion of the trains on the basis of predicted demand information representing the result of predicting the travel demands and extracts violation parts where the degrees of congestion do not fall within a predetermined allowable range; and a timetable correction program P01b that changes the timetable including changes in destinations of the trains such that the degrees of congestion at the violation parts fall within the allowable range or such that the degrees of congestion at the violation parts become close to the allowable range".

[Citation List]

[Patent Literature]

[Patent Literature 1] Japanese Patent Laid-Open Publication No. 2019-73146

[Summary of Invention]

[Technical Problem]

According to the timetable creation means described in Patent Literature 1, the timetable can be changed such that the degrees of congestion at the trains and stations fall within the predetermined allowable range on the basis of the result of predicting the travel demands.
Typically, when transportation services are used, determination of passengers regarding whether or not to use the transportation services significantly depends on travel preferences of the passengers. The passengers may give up utilization of the transportation services in a case where there are no travel routes and transportation legs suitable for the travel preferences.
However, the result of predicting the travel demands described in Patent Literature 1 is generated on the basis of past histories and do not take preferences of the passengers related to travel times, the numbers of transfers, and the like (that is, conditions under which the passengers use the transportation services, conditions under which the passengers give up the utilization of the transportation services, and the like) into consideration. Therefore, actual action trends of the passengers are not reflected to the result of predicting the travel demands described in Patent Literature 1, accuracy is thus limited, and the result may not accurately indicate actual travel demands.
In a case where an operation plan based on such a result of predicting the travel demands is created, there is a concern that transportation services that do not meet actual travel demands may be provided and a loss may occur in a transportation service provider such as a railway business operator.
Thus, an object of the present disclosure is to provide an operation plan creation means capable of improving passenger satisfaction with a transportation service and reducing operating costs for a transportation service provider by generating an operation plan suitable for actual travel demands in consideration of travel preferences of passengers of the transportation service.

[Solution to Problem]

In order to solve the above problem, a representative operation plan creation device of the present invention includes: a processor; a memory; and a storage unit, the storage unit includes existing operation plan information that indicates an existing operation plan related to a transportation service, passenger travel plan information that indicates travel plans of passengers who use the transportation service, travel preference information that indicates travel preferences of the passengers of the transportation service, and cancellation rule information that indicates cancellation rules in the transportation service, and the memory includes processing commands for causing the processor to function as a transportation leg network generation unit that generates transportation leg network information that defines each transportation leg in the transportation service on the basis of the existing operation plan information and the passenger travel plan information, a cancellation determination unit that generates transportation leg cancellation possibility information that indicates whether or not cancellation of each transportation leg in the transportation service is possible on the basis of the transportation leg network information and the cancellation rule information, a travel route candidate determination unit that generates travel route candidate information that indicates a travel route candidate for each travel plan in the passenger travel plan information on the basis of the transportation leg network information, the passenger travel plan information, and the travel preference information, a people flow prediction unit that generates people flow prediction information that indicates a predicted people flow in the transportation service on the basis of the transportation leg network information and the travel route candidate information, and an operation plan generation unit that generates new operation plan information in which certain transportation legs in the transportation service are eliminated, on the basis of the transportation leg network information, the transportation leg cancellation possibility information, and the people flow prediction information.

[Advantageous Effect of Invention]

According to the present disclosure, it is possible to provide an operation plan creation means capable of improving passenger satisfaction with a transportation service and reducing operating costs for a transportation service provider by generating an operation plan suitable for actual travel demands in consideration of travel preferences of passengers of the transportation service.

Other problems, configurations, and advantageous effects will be clarified by explanation in Description of Embodiment below.

[Brief Description of Drawings]

[FIG. 1] FIG. 1 is a diagram illustrating an example of a configuration of an operation plan creation system according to an embodiment of the present disclosure.

[FIG. 2] FIG. 2 is a diagram illustrating an example of a configuration of an operation plan creation device according to the embodiment of the present disclosure.

[FIG. 3] FIG. 3 is a diagram illustrating an example of an existing operation plan information table that stores existing operation plan information according to the embodiment of the present disclosure.

[FIG. 4] FIG. 4 is a diagram illustrating an example of a maintenance information table that stores maintenance information according to the embodiment of the present disclosure.

[FIG. 5] FIG. 5 is a diagram illustrating an example of a cancellation rule information table that stores cancellation rule information according to the embodiment of the present disclosure.

[FIG. 6] FIG. 6 is a diagram illustrating an example of a travel preference information table that stores travel preference information according to the embodiment of the present disclosure.

[FIG. 7] FIG. 7 is a diagram illustrating an example of a passenger travel plan information table that stores passenger travel plan information according to the embodiment of the present disclosure.

[FIG. 8] FIG. 8 is a diagram illustrating an example of a transportation leg network information table that stores transportation leg network information according to the embodiment of the present disclosure.

[FIG. 9] FIG. 9 is a diagram illustrating an example of a transportation leg cancellation possibility information table that stores transportation leg cancellation possibility information according to the embodiment of the present disclosure.

[FIG. 10] FIG. 10 is a diagram illustrating an example of a travel route candidate information table that stores travel route candidate information according to the embodiment of the present disclosure.

[FIG. 11] FIG. 11 is a diagram illustrating an example of a new operation plan information table that stores new operation plan information according to the embodiment of the present disclosure.

[FIG. 12] FIG. 12 is a diagram illustrating an example of an unsatisfied demand information table that stores unsatisfied demand information according to the embodiment of the present disclosure.

[FIG. 13] FIG. 13 is a diagram illustrating an example of a station facility information table that stores station facility information according to the embodiment of the present disclosure.

[FIG. 14] FIG. 14 is a diagram illustrating an example of a **KPI** information table that stores **KPI** information according to the embodiment of the present disclosure.

[FIG. 15] FIG. 15 is a diagram illustrating an example of a flow of operation plan creation preparation processing according to the embodiment of the present disclosure.

[FIG. 16] FIG. 16 is a diagram illustrating an example of a flow of operation plan creation processing according to the embodiment of the present disclosure.

[FIG. 17] FIG. 17 is a diagram illustrating an example of a flow of transportation leg network information creation processing according to the embodiment of the present disclosure.

[FIG. 18] FIG. 18 is a diagram illustrating an example of a flow of transportation leg cancellation possibility information creation processing according to the embodiment of the present disclosure.

[FIG. 19] FIG. 19 is a diagram illustrating an example of a flow of travel route candidate information creation processing according to the embodiment of the present disclosure.

[FIG. 20] FIG. 20 is a diagram illustrating an example of a flow of people flow prediction information creation processing according to the embodiment of the present disclosure.

[FIG. 21] FIG. 21 is a diagram illustrating an example of a flow of new operation plan information creation processing according to the embodiment of the present disclosure.

[FIG. 22] FIG. 22 is a diagram illustrating an example of a flow of evaluation and visualization processing according to the embodiment of the present disclosure.

[FIG. 23] FIG. 23 is a diagram illustrating an example of a KPI setting interface according to the embodiment of the present disclosure.

[FIG. 24] FIG. 24 is a diagram illustrating an example of an existing operation plan information evaluation result interface according to the embodiment of the present disclosure.

[FIG. 25] FIG. 25 is a diagram illustrating an example of a new operation plan information evaluation result interface according to the embodiment of the present disclosure.

[FIG. 26] FIG. 26 is a diagram illustrating an example of a travel route candidate information evaluation result interface according to the embodiment of the present disclosure.

[FIG. 27] FIG. 27 is a diagram illustrating a flow of a data flow in the operation plan creation system according to the embodiment of the present disclosure.

[FIG. 28] FIG. 28 is a diagram illustrating an example of a time-distance diagram of a transportation leg according to the embodiment of the present disclosure.

[FIG. 29] FIG. 29 is a diagram illustrating an example of a graph format of the transportation leg network information according to the embodiment of the present disclosure.

[Description of Embodiment]

Hereinafter, an embodiment of the present invention will be described with reference to the drawings. Note that the present invention is not limited by the embodiment. Also, the same portions are denoted by the same reference signs in the description of the drawings.

Also, although terms such as "first", "second", and "third" may be used to describe various elements or components in the present disclosure, it will be understood that these elements or components should not be limited by these terms. These terms will be used only to distinguish a certain element or component from another element or component. Therefore, a first element or component discussed below can also be called a second element or component without departing from the teaching of the concept of the present invention.

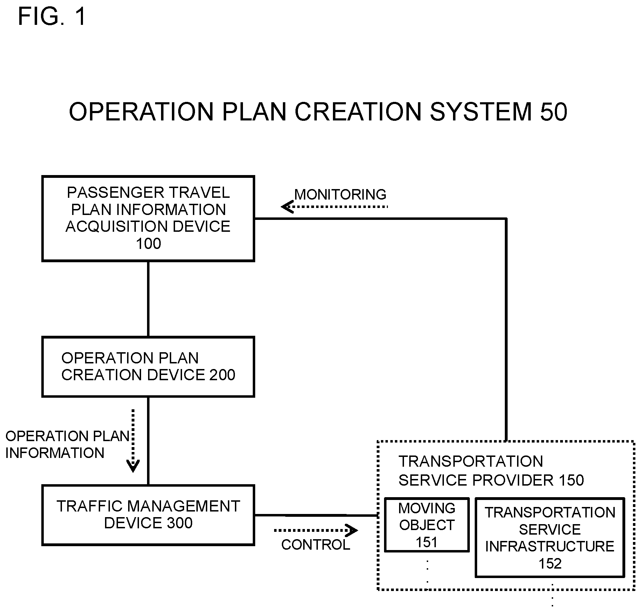

First, a configuration of an operation plan creation system according to the embodiment of the present disclosure will be described with reference to FIG. 1.

FIG. 1 is a diagram illustrating an example of a configuration of an operation plan creation system 50 according to the embodiment of the present disclosure. The operation plan creation system 50 according to the embodiment of the present disclosure is a system for creating an operation plan and providing the operation plan to a user such as a transportation service provider 150 and includes a passenger travel plan information acquisition device 100, a transportation service provider 150, an operation plan creation device 200, and a traffic management device 300 as illustrated in FIG. 1.

The transportation service provider 150 is a business or organization for providing a predetermined transportation service. In one example, the transportation service provider 150 may be a railway business operator that provides a railway service, for example. As illustrated in FIG. 1, the transportation service provider 150 includes a moving object 151 and a transportation service infrastructure 152.

The moving object 151 is a moving object used to provide the transportation service. For example, the moving object 151 may be a train set constituted by one or more railway vehicles.

The transportation service infrastructure 152 is facilities or equipment used to provide a predetermined transportation service. For example, the transportation service infrastructure 152 may include various railway infrastructures such as railways, stations, ticket gates, communication technologies, and maintenance facilities.

The passenger travel plan information acquisition device 100 is a device for acquiring passenger travel plan information that indicates travel plans of passengers who use the transportation service. The passenger travel plan information may be information indicating travel plans that have already been completed in the past or information indicating travel plans that have not yet been executed. In some embodiments, the travel plan information may be passenger origin/destination (OD) data that defines departure and arrival of the passengers.

In some embodiments, the passenger travel plan information acquisition device 100 may be a device that manages a sensor that acquires the passenger travel plan information by monitoring the moving object 151 and the transportation service infrastructure 152. In one example, the passenger travel plan information acquisition device 100 may be a server device that tallies data from sensors such as ticket gates and cameras installed at railway stations, for example, and transmits the data to the operation plan creation device 200 and may be appropriately selected in accordance with the type of the transportation service.

The operation plan creation device 200 is a device for creating an operation plan (for example, an operation timetable) to manage operations of transportation legs in the transportation service on the basis of the passenger travel plan information acquired by the passenger travel plan information acquisition device 100 and other information, which will be described later. In the present disclosure, the expression "transportation leg" means traveling performed by the moving object used in the transportation service and may include traveling of a train from a specific location of departure (station A) to a specific location of arrival (station B) in one example.

The traffic management device 300 is a device for managing traffic in the transportation service of the transportation service provider 150 on the basis of the operation plan created by the operation plan creation device 200. In some embodiments, the traffic management device 300 may be owned and managed by the transportation service provider 150. In one example, the traffic management device 300 may perform dispatch, congestion management, and the like in the transportation service in accordance with the operation plan created by the operation plan creation device 200.

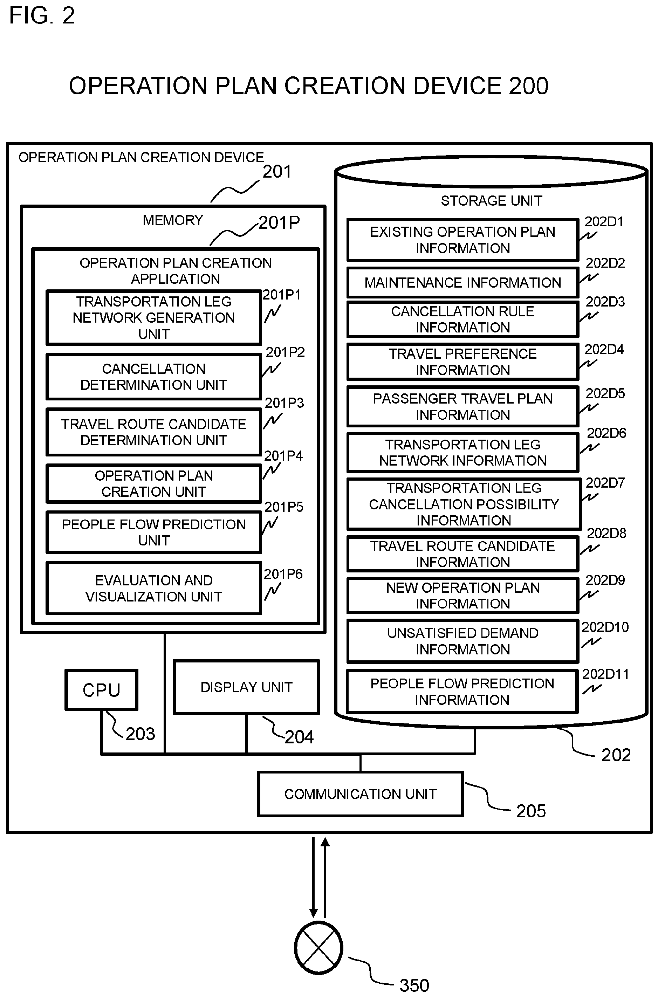

Next, a configuration of the operation plan creation device according to the embodiment of the present disclosure will be described with reference to FIG. 2.

FIG. 2 is a diagram illustrating an example of the configuration of the operation plan creation device 200 according to the embodiment of the present disclosure. As described above, the operation plan creation device 200 is a device that creates an operation plan for managing operations of transportation legs (such as a train schedule) in the transportation service and mainly includes a memory 201, a storage unit 202, a CPU 203, a display unit 204, and a communication unit 205 as illustrated in FIG. 2.

The memory 201 may be a random access memory (RAM), for example, and includes an operation plan creation application 201P as illustrated in FIG. 2. The operation plan creation application 201P is constituted by a plurality of functional units including commands or descriptions to execute various kinds of processing to create an operation plan on the CPU 203, which will be described later.

For example, the operation plan creation application 201P may include a transportation leg network generation unit 201P1, a cancellation determination unit 201P2, a travel route candidate determination unit 201P3, an operation plan creation unit 201P4, a people flow prediction unit 201P5, and an evaluation and visualization unit 201P6 as illustrated in FIG. 2.

The transportation leg network generation unit 201P1 is a functional unit that acquires existing operation plan information 202D1 and passenger travel plan information 202D5 from the storage unit 202 and generates transportation leg network information 202D6 that indicates, in a graph format, each transportation leg in the transportation service indicated in the existing operation plan information 202D1 and that can be handled as an optimization problem.

The transportation leg network generation unit 201P1 may store the generated transportation leg network information 202D6 in the storage unit 202.

The cancellation determination unit 201P2 is a functional unit that acquires maintenance information 202D2, cancellation rule information 202D3, and the transportation leg network information 202D6 from the storage unit 202 and generates transportation leg cancellation possibility information 202D7 that indicates whether or not cancellation of each transportation leg in the existing operation plan information 202D1 is possible. Here, the cancellation determination unit 201P2 can generate the transportation leg cancellation possibility information 202D7 that indicates transportation legs that can be canceled and transportation legs that cannot be canceled in the transportation leg network information 202D6 by considering information regarding station facilities, information regarding events, and the like indicated by the maintenance information 202D2 and the cancellation rule information 202D3.

The cancellation determination unit 201P2 may store the generated transportation leg cancellation possibility information 202D7 in the storage unit 202.

The travel route candidate determination unit 201P3 is a functional unit that acquires travel preference information 202D4, the passenger travel plan information 202D5, and the transportation leg network information 202D6 from the storage unit 202 and generates travel route candidate information 202D8 that indicates candidates for travel routes adapted to travel preferences of passengers for each travel plan in the passenger travel plan information 202D5 by applying the travel preference information 202D4 to the transportation leg network information 202D6. As will be described later, it is possible to predict a people flow that more accurately indicates demands for the transportation service by using the travel route (such as a travel route with a shorter traveling time) adapted to the travel preferences of the passengers.

The travel route candidate determination unit 201P3 may store the generated travel route candidate information 202D8 in the storage unit 202.

The operation plan creation unit 201P4 is a functional unit that acquires the transportation leg network information 202D6, the transportation leg cancellation possibility information 202D7, unsatisfied demand information 202D10, and people flow prediction information 202D11 from the storage unit 202 and generates new operation plan information 202D9 in which certain transportation legs in the transportation service are eliminated, on the basis of the acquired information. Here, the operation plan creation unit 201P4 may generate the new operation plan information 202D9 in which transportation legs (such as transportation legs where the numbers of passengers are small) that do not satisfy a predetermined demand criterion are canceled.

Also, the travel route candidate determination unit 201P3 may store the generated new operation plan information 202D9 in the storage unit 202.

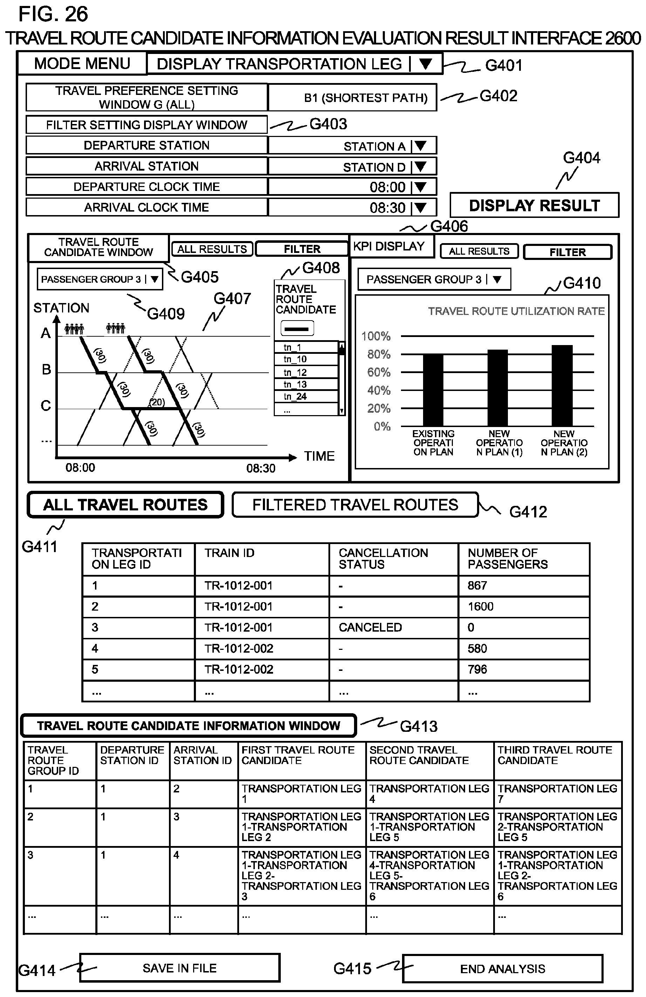

The people flow prediction unit 201P5 is a functional unit that acquires the transportation leg network information 202D6 and the travel route candidate information 202D8 from the storage unit and generates the people flow prediction information 202D11 that indicates a predicted people flow in the transportation service. The number of passengers for each travel route candidate indicated in the travel route candidate information 202D8 may be displayed on a travel route candidate information evaluation result interface (see FIG. 26), which will be described later. In some embodiments, the people flow prediction unit 201P5 may calculate, for each travel route candidate in the travel route candidate information 202D8, the predicted number of passengers (the first number of passengers) who are predicted to use the travel route candidate, calculate the number of passengers (the second number of passengers) of a travel plan corresponding to the travel route candidate on the basis of the passenger travel plan information 202D5, and calculate a difference between the calculated first number of passengers and second number of passengers (a value obtained by subtracting the first number of passengers from the second number of passengers) as the unsatisfied demand information 202D10.

The people flow prediction unit 201P5 may store the unsatisfied demand information 202D10 and the people flow prediction information 202D11 in the storage unit 202.

The evaluation and visualization unit 201P6 is a functional unit for performing evaluation on the new operation plan information 202D9 generated by the operation plan creation unit 201P4 and displaying a result of the evaluation and other various kinds of information used by the operation plan creation device 200 on a user interface such as a GUI.

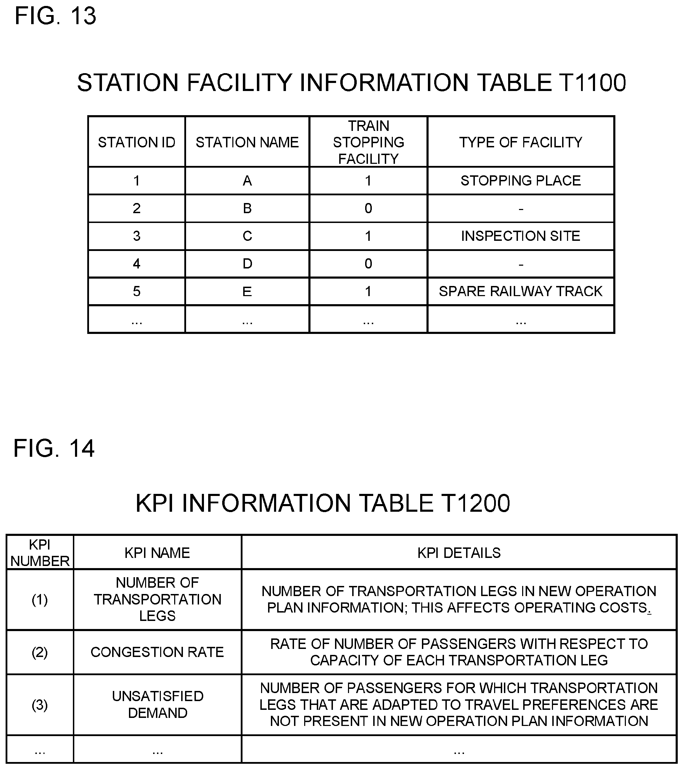

The storage unit 202 is a storage unit for storing various kinds of information to be used by each functional unit of the operation plan creation application 201P and may be, for example, a hard disk drive (HDD) or a solid state drive (SSD). As illustrated in FIG. 2, the storage unit 202 may store the existing operation plan information 202D1, the maintenance information 202D2, the cancellation rule information 202D3, the travel preference information 202D4, the passenger travel plan information 202D5, the transportation leg network information 202D6, the transportation leg cancellation possibility information 202D7, the travel route candidate information 202D8, the new operation plan information 202D9, the unsatisfied demand information 202D10, and the people flow prediction information 202D11. Note that the storage unit 202 is not limited thereto and may include information other than those illustrated in FIG. 2 (for example, the station facility information table illustrated in FIG. 13 and the KPI information illustrated in FIG. 14).

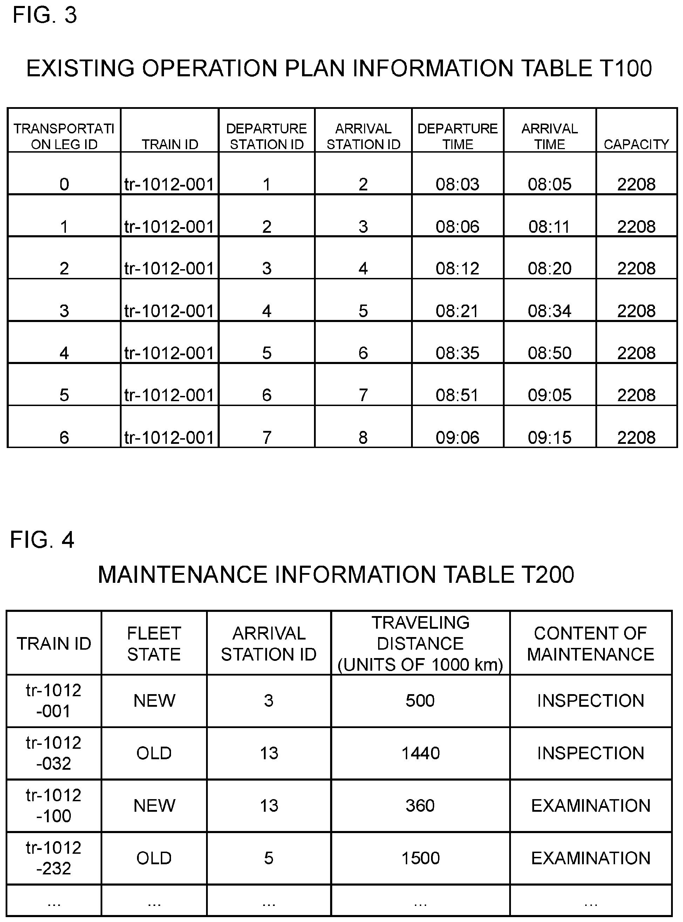

Note that since details of the above various kinds of information stored in the storage unit 202 will be described later with reference to FIGS. 3 to 14, description thereof will be omitted here.

The CPU 203 is a processor for executing instructions or commands from each functional units constituting the operation plan creation application 201P stored in the memory 201. In some embodiments, the CPU 203 may include a control unit (CU), an arithmetic logic unit (ALU), and an immediate access store (IAS).

The display unit 204 is a functional unit that displays a user interface that receives inputs of information to the operation plan creation application 201P stored in the memory 201 and displays information output from the operation plan creation application 201P. In some embodiments, the display unit 204 may include, for example, a single display screen, a screen of a television, a tablet, or a mobile terminal, or the like.

The communication unit 205 is a functional unit that performs communication between the operation plan creation device 200 and external devices (for example, the traffic management device 300 and a terminal of the transportation service provider 150 illustrated in FIG. 1) via a communication network 350 such as the Internet, for example. The external devices here may include, for example, application devices that use a transportation service management system, such as an input device for inputting KPIs and settings to the operation plan creation device 200, a monitoring device for acquiring information related to the transportation service (such as a ticket gate, a sensor, a station camera, a railroad camera, or a radio), a traffic management system (TMS), a European traffic control system (ETCS), an automatic train operation system (ATO), and a passenger information system (PIS).

According to the operation plan creation device 200 described above, it is possible to generate an operation plan capable of improving passengers satisfaction with the transportation service and reducing operating costs for the transportation service provider by generating the operation plan suitable for the actual travel demands in consideration of the travel preferences of the passengers of the transportation service.

Next, various kinds of information used by the operation plan creation device 200 according to the embodiment of the present disclosure will be described with reference to FIGS. 3 to 14. Note that the information may be stored in the storage unit 202 in the operation plan creation device 200 as described above. However, the present disclosure is not limited thereto, and a configuration in which the information is stored on a cloud, for example, is also possible.

FIG. 3 is a diagram illustrating an example of an existing operation plan information table T100 that stores the existing operation plan information 202D1 according to the embodiment of the present disclosure. The existing operation plan information 202D1 is information that indicates an existing operation plan related to the transportation service. As illustrated in FIG. 3, the existing operation plan information table T100 that stores the existing operation plan information 202D1 may include information related to transportation leg IDs, train IDs, departure station IDs, arrival station IDs, departure times, arrival times, and the capacities.

The transportation leg IDs are information that uniquely identifies certain transportation legs performed in the transportation service. As described above, the expression "transportation leg" in the present disclosure means traveling performed by the moving object used in the transportation service and may include traveling of a train from a specific location of departure (station A) to a specific location of arrival (station B) in one example.

The train IDs are information that uniquely identifies trains for performing the transportation legs. Note that although a train ID of a train is the same in a transportation leg, the train ID may be changed when a new transportation leg is started.

The departure station IDs are information that uniquely identifies stations as start points of transportation legs.

The arrival station IDs are information that uniquely identifies stations as end points of transportation legs.

The departure times are information that indicates times at which transportation legs are started.

The arrival times are information that indicates times at which transportation legs end.

The capacities are information that indicates the maximum number of passengers who can board trains in certain transportation legs.

FIG. 4 is a diagram illustrating an example of a maintenance information table T200 that stores the maintenance information 202D2 according to the embodiment of the present disclosure. The maintenance information 202D2 is information that indicates a plan of maintenance for the transportation service. As illustrated in FIG. 4, the maintenance information table T200 that stores the maintenance information 202D2 may include information related to train IDs, fleet states, arrival station IDs, traveling distances, and maintenance actions.

The train IDs are information that uniquely identifies trains for performing the transportation legs.

The fleet states are information indicating which of "old" or "new" states of fleets (groups of trains) to which trains belong are.

The arrival station IDs are information that uniquely identifies stations where trains for which maintenance is scheduled arrives.

The traveling distances are information that indicates cumulative distances by which the trains have traveled.

The maintenance content is information that indicates content of maintenance actions to be performed on the trains. The maintenance content may be determined in accordance with states of fleets to which the trains belong and the traveling distances, for example. As illustrated in the maintenance information table T200, the maintenance content may include regular inspection that is completed in a short period of time and detailed examination that takes time, for example.

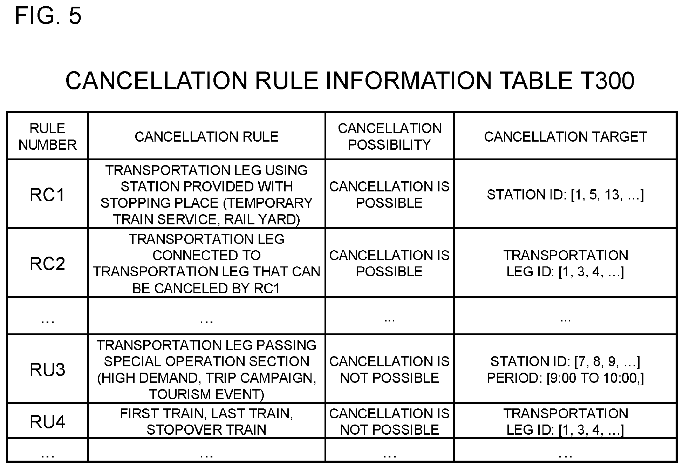

FIG. 5 is a diagram illustrating an example of a cancellation rule information table T300 that stores the cancellation rule information 202D3 according to the embodiment of the present disclosure. The cancellation rule information 202D3 is information that indicates cancellation rules for the transportation service. As illustrated in FIG. 5, the cancellation rule information table T300 that stores the cancellation rule information 202D3 may include information related to rule numbers, cancellation rules, whether or not cancellation is possible, and cancellation targets.

The rule numbers are information that uniquely identifies certain cancellation rules.

The cancellation rules are information that describes transportation legs that can be canceled or cannot be canceled. These cancellation rules may be defined by a user or the like of the transportation service provider 150, for example.

Whether or not cancellation is possible is information that is defined by the cancellation rules and indicates whether transportation legs can be canceled or cannot be canceled.

The cancellation targets are information that defines stations, transportation legs, periods of time, and the like to which the cancellation rules are applied.

In one example, the cancellation rule information table T300 may include a cancellation rule RC1 that defines that transportation legs using stations provided with stopping places "can be canceled" and a cancellation rule RC2 that defines that other transportation legs connected to the transportation legs that can be canceled on the basis of the cancellation rule RC1 "can be canceled", as illustrated in FIG. 5. Also, the cancellation rule information table T300 may include a cancellation rule RU3 that defines that transportation legs passing special operation sections, such as sections with high travel demands, sections as targets of trip campaigns, and sections where tourism events are being held, for example, "cannot be canceled" and a cancellation rule RU4 that defines that first trains and last trains "cannot be canceled".

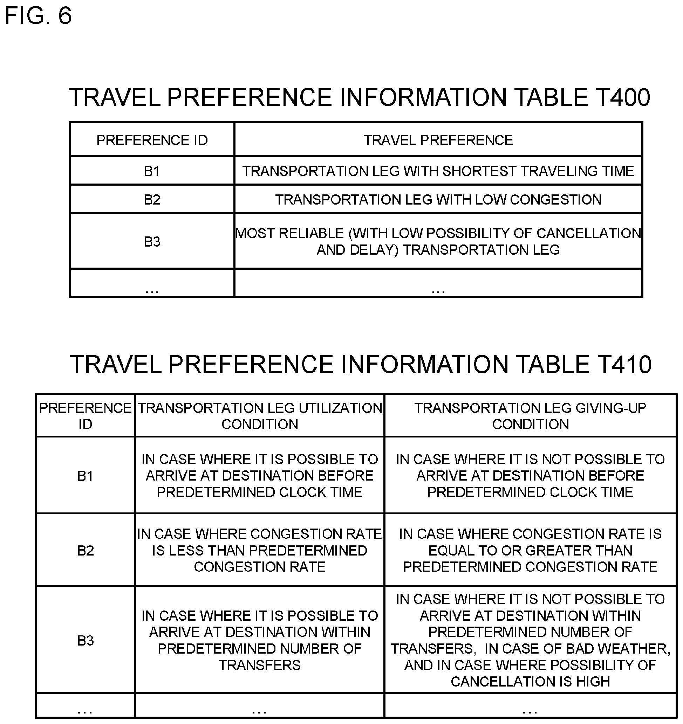

FIG. 6 is a diagram illustrating an example of travel preference information tables T400 and T410 that store the travel preference information 202D4 according to the embodiment of the present disclosure. The travel preference information 202D4 is information that indicates travel preferences of passengers who are users of the transportation service.

The travel preference information table T400 may include preference IDs and travel preferences.

The preference IDs are information that uniquely identifies certain travel preferences of the passengers.

The travel preferences are information that indicates features of traveling that certain passengers like. In one example, the travel preference information table T400 may include travel preferences that define "B1: a transportation leg with the shortest traveling time", "B2: a transportation leg with low congestion", and "B3: a most reliable (less possibilities of cancellation and delay) transportation leg" as illustrated in FIG. 6.

The travel preference information table 410 may include, for each preference ID, a transportation leg utilization condition and a transportation leg giving-up condition of the passengers. In the present disclosure, the "transportation leg utilization condition of the passengers" and the "transportation leg giving-up condition" may be collectively referred to as "preference conditions".

The transportation leg utilization condition is information that indicates a condition under which the transportation leg is used in regard to a certain travel preference indicated by a preference ID. In one example, the transportation leg utilization condition may include "a case where it is possible to arrive at a destination before a predetermined clock time", "a case where a congestion rate is less than a predetermined congestion rate", and "a case where it is possible to arrive at a destination within a predetermined number of transfers".

The transportation leg giving-up condition is information that indicates a condition under which a transportation leg is given up in regard to a certain travel preference indicated by a preference ID. In one example, the transportation leg giving-up condition may include "a case where it is not possible to arrive at a destination before a predetermined clock time", "a case where it is more than or equal to predetermine congestion rate", "a case where it is not possible to arrive at a destination within a predetermined number of transfers, a case of bad weather, and a case where a possibility of cancellation is high".

Note that the information related to the travel preferences of the passengers illustrated in the travel preference information tables T400 and T410 may be determined by performing predetermined statistical analysis on passenger travel information acquired in the past or may be determined on the basis of public opinion surveys, opinions of specialists, and the like, for example.

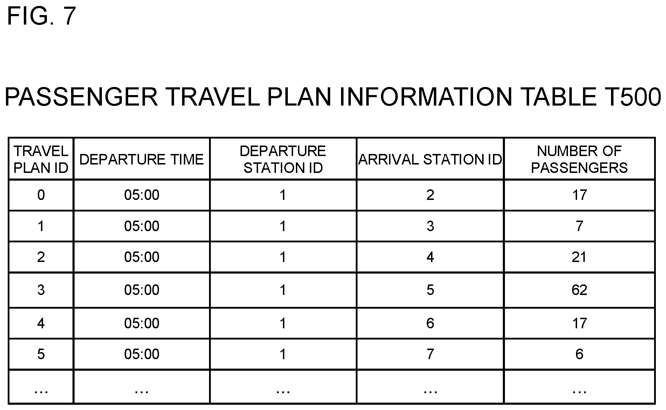

FIG. 7 is a diagram illustrating an example of a passenger travel plan information table T500 that stores the passenger travel plan information 202D5 according to the embodiment of the present disclosure. The passenger travel plan information 202D5 is information related to travel plans of the passengers who use the transportation service. As illustrated in FIG. 7, the passenger travel plan information table T500 that stores the passenger travel plan information 202D5 may include travel route IDs, departure times, departure station IDs, arrival station IDs, and the numbers of passengers.

Note that the passenger travel plan information 202D5 stored in the passenger travel plan information table T500 may be passenger OD data acquired from sensors such as ticket gates and cameras installed in facilities for the transportation service, for example. In some embodiments, the passenger travel plan information 202D5 may be consolidated and acquired every ten minutes.

The travel plan IDs are information that uniquely identifies travel plans of passengers.

The departure times are information that indicates departure times of transportation legs in certain travel plans.

The departure station IDs are information that uniquely identifies stations as starting points of certain travel plans.

The arrival station IDs are information that uniquely identifies stations as end points of certain travel plans.

The numbers of passengers are information that indicates the numbers of passengers traveling in accordance with certain travel plans.

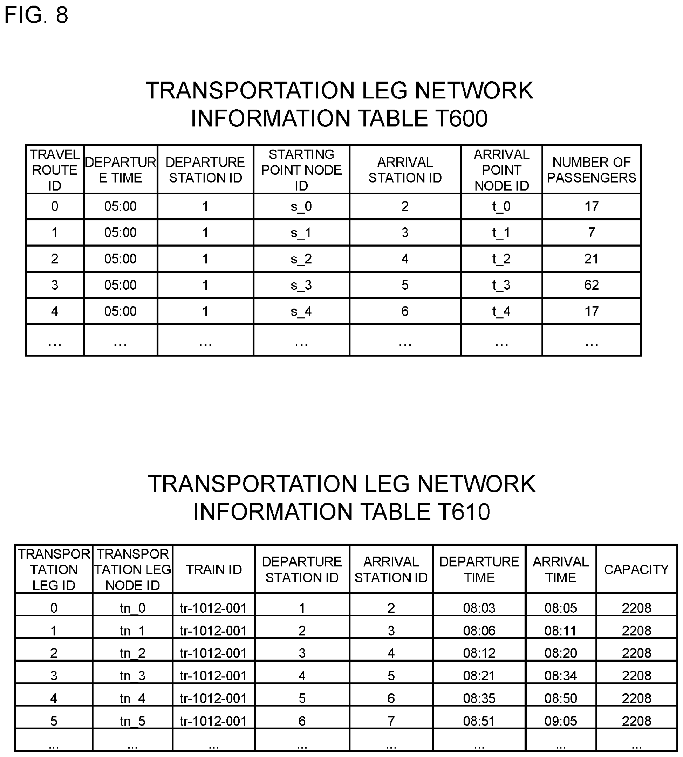

FIG. 8 is a diagram illustrating an example of transportation leg network information tables T600 and T610 that store the transportation leg network information 202D6 according to the embodiment of the present disclosure. As described above, the transportation leg network information 202D6 stored in the transportation leg network information tables T600 and T610 is information that indicates each transportation leg in the transportation service and is generated by the transportation leg network generation unit 201P1.

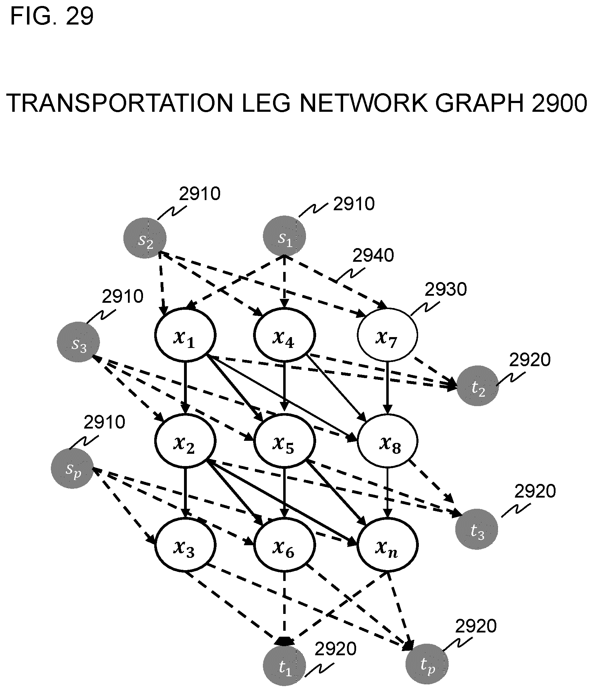

Note that although the transportation leg network information 202D6 is illustrated in a table format in FIG. 8 for convenience of explanation, the transportation leg network information 202D6 may be expressed in a graph format as illustrated in FIG. 29, for example.

The transportation leg network information table T600 stores information that is substantially similar to that in the aforementioned passenger travel plan information table T500, and description related to the common information will thus be omitted.

The transportation leg network information table T600 includes, in addition to the aforementioned information in the passenger travel plan information table T500, information regarding starting point node IDs that uniquely identify starting point nodes corresponding to departure stations and information regarding arrival point node IDs that uniquely identify arrival point nodes corresponding to arrival stations.

The transportation leg network information table T610 stores information that is substantially similar to that in the aforementioned existing operation plan information table T100, and description related to the common information will thus be omitted.

The transportation leg network information table T610 includes, in addition to the information in the aforementioned existing operation plan information table T100, information regarding transportation leg node IDs that uniquely identify transportation leg nodes corresponding to transportation legs.

It is possible to create an operation plan in consideration of preferences of passengers in regard to traveling and cost effectiveness of the railway transportation service by representing the transportation leg network information 202D6 stored in the aforementioned transportation leg network information tables T600 and T610 as a so-called mixed integer linear problem (MILP) and analyzing the transportation leg network information 202D6 by an optimization algorithm such as an exact method or a non-exact method.

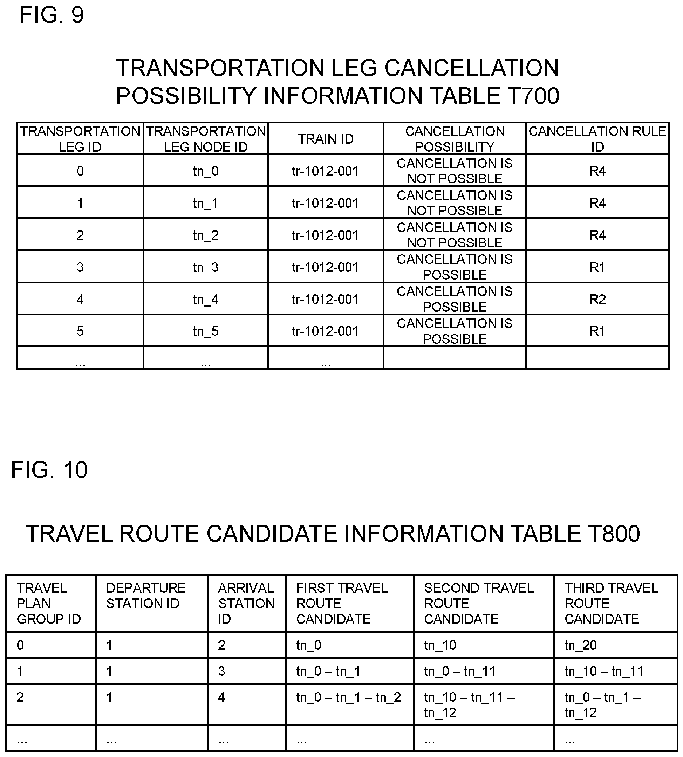

FIG. 9 is a diagram illustrating an example of a transportation leg cancellation possibility information table T700 that stores the transportation leg cancellation possibility information 202D7 according to the embodiment of the present disclosure. The transportation leg cancellation possibility information 202D7 stored in the transportation leg cancellation possibility information table T700 is information indicating whether or not cancellation of each transportation leg in the existing operation plan information 202D1 is possible, and is generated by the cancellation determination unit 201P2. As illustrated in FIG. 9, the transportation leg cancellation possibility information table T700 may include information related to transportation leg IDs, transportation leg node IDs, train IDs, whether or not cancellation is possible, and cancellation rule IDs.

The transportation leg IDs are information that uniquely identifies certain transportation legs performed in the transportation service.

The transportation leg node IDs are information that is for uniquely identifying transportation leg nodes corresponding to certain transportation legs in the transportation leg network information in the graph format.

The train IDs are information that uniquely identifies trains for performing the transportation legs.

Whether or not cancellation is possible is information that indicates whether certain transportation legs can be canceled or cannot be canceled.

The cancellation rule IDs are information that uniquely identifies cancellation rules that define whether certain transportation legs can be canceled or cannot be canceled.

According to the transportation leg cancellation possibility information 202D7 described above, it is possible to store the information related to whether or not each transportation leg in the transportation service can be canceled and the cancellation rules used to determine whether or not each transportation leg can be canceled.

FIG. 10 is a diagram illustrating an example of a travel route candidate information table T800 that stores the travel route candidate information 202D8 according to the embodiment of the present disclosure. The travel route candidate information 202D8 stored in the travel route candidate information table T800 is information that can be used to perform each travel plan and indicates candidates for travel routes adapted to the travel preference information 202D4 of the passengers, for each travel plan in the passenger travel plan information 202D5. The travel route candidate information 202D8 is generated by the travel route candidate determination unit 201P3, which will be described later, for example.

As illustrated in FIG. 10, the travel route candidate information 202D8 may include travel plan group IDs, departure station IDs, arrival station IDs, first travel route candidates, second travel route candidates, and third travel route candidates.

The travel plan group IDs are information that uniquely identifies sets of travel plans grouped for each predetermined time interval.

The departure station IDs are information that uniquely identifies stations as start points of travel routes.

The arrival station IDs are information that uniquely identifies stations as end points of the travel routes.

The first travel route candidates, the second travel route candidates, and the third travel route candidates are candidates for recommended transportation legs to travel along certain travel routes that are determined on the basis of the travel preferences of the passengers.

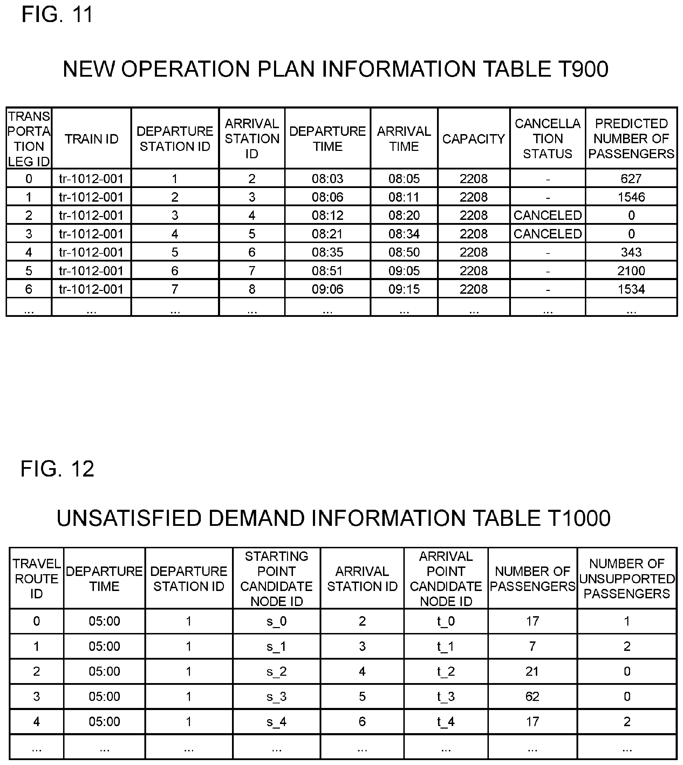

FIG. 11 is a diagram illustrating an example of a new operation plan information table T900 that stores the new operation plan information 202D9 according to the embodiment of the present disclosure. The new operation plan information 202D9 is information that indicates operation plans in which certain transportation legs in the transportation service are eliminated. As illustrated in FIG. 11, the new operation plan information table T900 that stores the new operation plan information 202D9 may include information regarding transportation leg IDs, train IDs, departure station IDs, arrival station IDs, departure times, arrival times, capacities, cancellation statuses, and the predicted numbers of passengers.

Note that the new operation plan information table T900 stores information that is substantially similar to that in the aforementioned existing operation plan information table T100, and description related to the common information will thus be omitted.

The cancellation statuses are information that indicates whether or not each transportation leg is a target of cancellation. In FIG. 11, "-" represents that the corresponding transportation leg is not a target of cancellation while "cancellation" represents that the corresponding transportation leg is a target of cancellation.

The predicted numbers of passengers are information that indicates the number of passengers for each transportation leg predicted through people flow prediction information creation processing 2000, which will be described later, and substantially corresponds to the people flow prediction information 202D11 illustrated in FIG. 2, for example.

FIG. 12 is a diagram illustrating an example of an unsatisfied demand information table T1000 that stores the unsatisfied demand information 202D10 according to the embodiment of the present disclosure. The unsatisfied demand information 202D10 stored in the unsatisfied demand information table T1000 is information related to the numbers of passengers who are predicted to give up utilization of the transportation service because no travel routes adapted to the travel preference information 202D4 are present. As illustrated in FIG. 12, the unsatisfied demand information table T1000 may include information related to travel route IDs, departure times, departure station IDs, starting point node IDs, arrival station IDs, arrival point node IDs, the numbers of passengers, and the numbers of unsupported passengers.

Note that the unsatisfied demand information table T1000 stores information that is substantially similar to that in the aforementioned transportation leg network information table T600, and description related to the common information will thus be omitted.

The numbers of unsupported passengers are information that indicates the numbers of passengers who are predicted to give up utilization of the transportation service because no candidates for travel routes adapted to the transportation leg utilization condition indicated by the aforementioned travel preference information 202D4, for example, are present. The numbers of unsupported passengers may be calculated through the people flow prediction information creation processing 2000, which will be described later.

FIG. 13 is a diagram illustrating an example of a station facility information table T1100 that stores station facility information according to the embodiment of the present disclosure. The station facility information is information that indicates, for each station used in the transportation service, facilities provided in the station. As illustrated in FIG. 13, the station facility information table T1100 may include information related to station IDs, station names, train stopping equipment, and types of facilities.

The station IDs are information that uniquely identifies stations used in the transportation service.

The station names are information that indicates names of the stations used in the transportation service.

The train stopping facilities are information that indicates whether or not there are train stopping facilities such as stopping places in certain stations. Here, "1" means that there are train stopping facilities, while "0" means that there are no train stopping facilities.

The types of facilities are information that indicates types of train stopping facilities for stations provided with the train stopping facilities. The types of facilities may include, for example, stopping places, inspection sites, spare railway tracks.

FIG. 14 is a diagram illustrating an example of a KPI information table that stores KPI information according to the embodiment of the present disclosure. The KPI information is information that indicates KPI for evaluating operation plan information. As illustrated in FIG. 14, a KPI information table 1200 may include KPI numbers, KPI names, and KPI details.

The KPI numbers are information that uniquely identifies certain key performance indicators (KPIs). The KPIs described here are indicators for quantitatively evaluating performance of operation plans.

The KPI names are information that indicates names of certain KPIs.

The KPI details are information that indicates details of content of certain KPIs.

In one example, the KPI information table 1200 may include KPIs such as "the number of transportation legs", "a congestion rate", and "an unsatisfied demand" as illustrated in FIG. 14.

The "number of transportation legs" indicates the number of transportation legs in the new operation plan information. In principle, the operating costs for the transportation legs increases as the number of transportation legs increases. Therefore, the operation plan creation means according to the embodiment of the present disclosure relates to creating an operation plan for eliminating transportation legs that have low demands while suppressing congestion rates and unsatisfied demands to thereby reduce operating costs.

The "number of transportation legs" can be calculated by counting transportation leg nodes in a transportation leg network corresponding to the new operation plan information. Also, the "number of transportation legs" may be indicated as a percentage with respect to the number of transportation legs in the existing operation plan information in a KPI setting interface 2300, which will be described later.

The "congestion rate" is a ratio of the number of passengers with respect to a capacity of a transportation leg. As the "congestion rate", the proportion of the number of passengers with respect to a capacity of a transportation leg may be indicated as a percentage in the KPI setting interface 2300, which will be described later.

The "unsatisfied demand" is the number of passengers who give up utilization of the transportation service because no transportation legs adapted to the travel preferences are present, and is calculated through the people flow prediction information creation processing 2000, which will be described later. Also, the "unsatisfied demand" may be expressed as a percentage of the number of passengers who give up utilization of the transportation service because no transportation legs adapted to the travel preferences are present with respect to the number of passengers in the existing operation plan information in the KPI setting interface 2300, which will be described later.

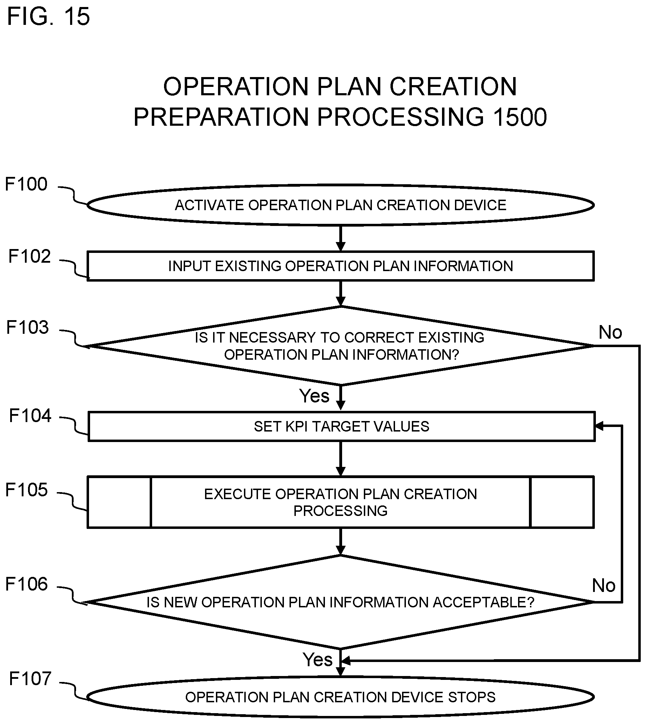

Next, operation plan creation preparation processing according to an example embodiment of the present disclosure will be described with reference to FIG. 15.

FIG. 15 is a diagram illustrating an example of a flow of operation plan creation preparation processing 1500 according to the embodiment of the present disclosure. The operation plan creation preparation processing 1500 is processing executed in a case where the operation plan creation device 200 receives a request for creating an operation plan from, for example, a user of the transportation service provider 150 or the like. In some embodiments, the operation plan creation preparation processing 1500 may be regularly performed at regular intervals (daily or weekly).

First, in Step F100, the operation plan creation device 200 is activated.

Next, in Step F102, the operation plan creation device 200 inputs the existing operation plan information 202D1. Here, the operation plan creation device 200 may receive the existing operation plan information 202D1 input by, for example, the user of the transportation service provider 150 or the like via a communication network such as the Internet and store the existing operation plan information 202D1 in the storage unit 202.

Next, in Step F103, the operation plan creation device 200 determines whether or not it is necessary to correct the existing operation plan information 202D1 input in Step F102. Here, the operation plan creation device 200 may determine whether or not it is possible to eliminate transportation legs (that is, cancel the transportation legs) in the transportation service on the basis of a requirement of the transportation service provider 150 that has input the existing operation plan information 202D1, demands for the transportation service, and the like, and determine that it is necessary to correct the existing operation plan information 202D1 in a case where it is possible to eliminate the transportation legs, or determine that it is not necessary to correct the existing operation plan information 202D1 in a case where it is not possible to eliminate the transportation legs.

In one example, the operation plan creation device 200 may determine that it is necessary to correct the existing operation plan information 202D1 in a case where it is determined that transportation legs that have low demands (and do not satisfy a predetermined criterion for the number of passengers) are present and it is desirable that the transportation legs be eliminated to reduce operating costs on the basis of the existing operation plan information 202D1.

On the other hand, the operation plan creation device 200 may determine that it is not necessary to correct the existing operation plan information 202D1 in a case where it is determined that a demand for the transportation service is high (the predetermined criterion for the number of passengers is satisfied) and it is not possible to satisfy the demand if the transportation legs are eliminated on the basis of the existing operation plan information 202D1.

In a case where it is determined to be necessary to correct the existing operation plan information 202D1, the processing proceeds to Step F104. On the other hand, in a case where it is determined not to be necessary to correct the existing operation plan information 202D1, the processing proceeds to Step F107.

Next, in Step F104, the operation plan creation device 200 sets target values of KPIs. Here, the operation plan creation device 200 may receive a user's input to set the target value of each KPI stored in the aforementioned KPI information table 1200 via the KPI setting interface 2300, which will be described later, and set the target values of the KPIs on the basis of the user's input.

Next, in Step F105, the operation plan creation device 200 executes operation plan creation processing 1600, which will be described later, generates the new operation plan information 202D9, and stores the generated new operation plan information 202D9 in the storage unit 202. Also, here, the operation plan creation device 200 may present the generated new operation plan information 202D9 to the user of the transportation service provider 150 or the like via a new operation plan information evaluation result interface 2500, which will be described later.

Note that details of the operation plan creation processing 1600 will be described later, and description thereof will thus be omitted here.

Next, in Step F106, the operation plan creation device 200 determines whether or not the new operation plan information 202D9 generated in Step F105 is acceptable. Here, the operation plan creation device 200 may determine whether or not the new operation plan information 202D9 is acceptable on the basis of whether or not the KPI values in the new operation plan information 202D9 achieve the KPI target values set in Step F104, whether the transportation legs can be eliminated, a loss that the elimination may lead to, and the like. Also, the determination here may be performed on the basis of a user's instruction input via the evaluation result interface 2500.

In some embodiments, the operation plan creation device 200 may determine that the new operation plan information 202D9 generated in Step F105 is not acceptable, encourage the user or the like to reset the KPI target values set in Step F104, and generate corrected operation plan information that has been corrected not to exceed a predetermined unsatisfied demand threshold value in a case where it is determined that unsatisfied demand information (that is, the number of passengers who are predicted to give up utilization of the transportation service because no travel routes adapted to the travel preference information 202D4 are present) exceeds the unsatisfied demand threshold value.

In a case where it is determined that the new operation plan information 202D9 is acceptable, the processing proceeds to Step F107. On the other hand, in a case where it is determined that the new operation plan information 202D9 is not acceptable, the processing returns to Step F104, and the target values of the KPIs are reset.

Next, in Step F107, the operation plan creation preparation processing 1500 ends, and the operation plan creation device 200 ends.

According to the operation plan creation preparation processing 1500 described above, it is possible to generate an operation plan capable of improving passenger satisfaction with a transportation service and reducing operating costs for a transportation service provider by generating an operation plan suitable for actual travel demands in consideration of travel preferences of passengers of the transportation service.

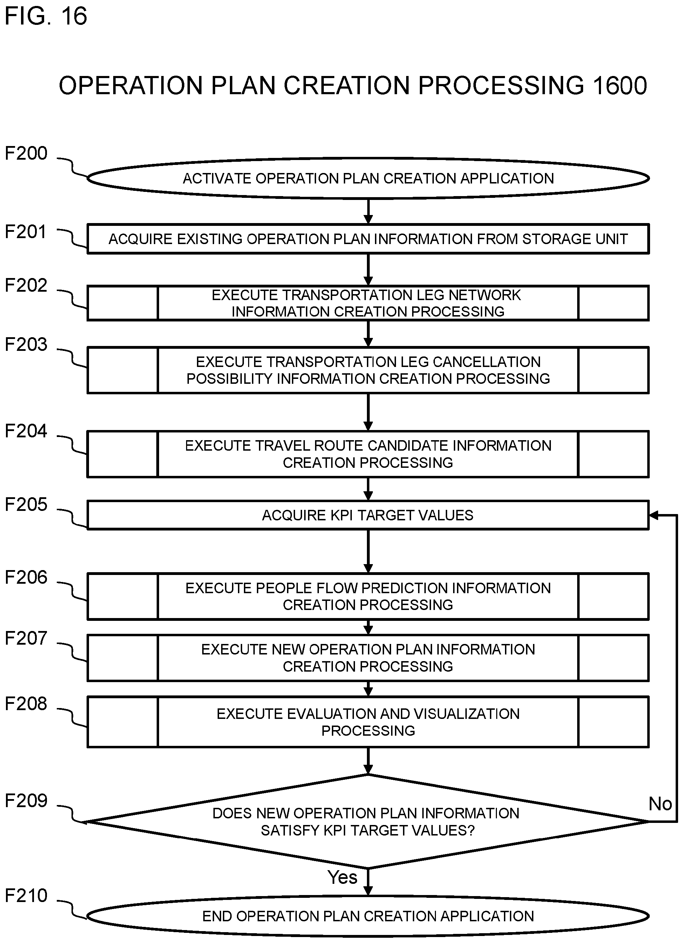

Next, operation plan creation processing according to the embodiment of the present disclosure will be described will be described with reference to FIG. 16.

FIG. 16 is a diagram illustrating an example of a flow of the operation plan creation processing 1600 according to the embodiment of the present disclosure. The operation plan creation processing 1600 is processing for generating an operation plan to manage operation of transportation legs (such as train schedules) and may be performed by each functional unit included in the operation plan creation application 201P illustrated in FIG. 2.

First, in Step F200, the operation plan creation application 201P of the operation plan creation device 200 is activated.

Next, in Step F201, the operation plan creation application 201P acquires the existing operation plan information 202D1 from the storage unit 202. The existing operation plan information 202D1 may be existing operation plan information input by the user of the transportation service provider 150 or the like in the aforementioned operation plan creation preparation processing 1500, for example.

Next, in Step F202, the transportation leg network generation unit 201P1 of the operation plan creation application 201P generates the transportation leg network information 202D6 that indicates each transportation leg in the transportation service indicated in the existing operation plan information 202D1 in the graph format and that can be handled as an optimization problem, on the basis of the existing operation plan information 202D1 acquired from the storage unit 202 in Step F201 and the passenger travel plan information 202D5.

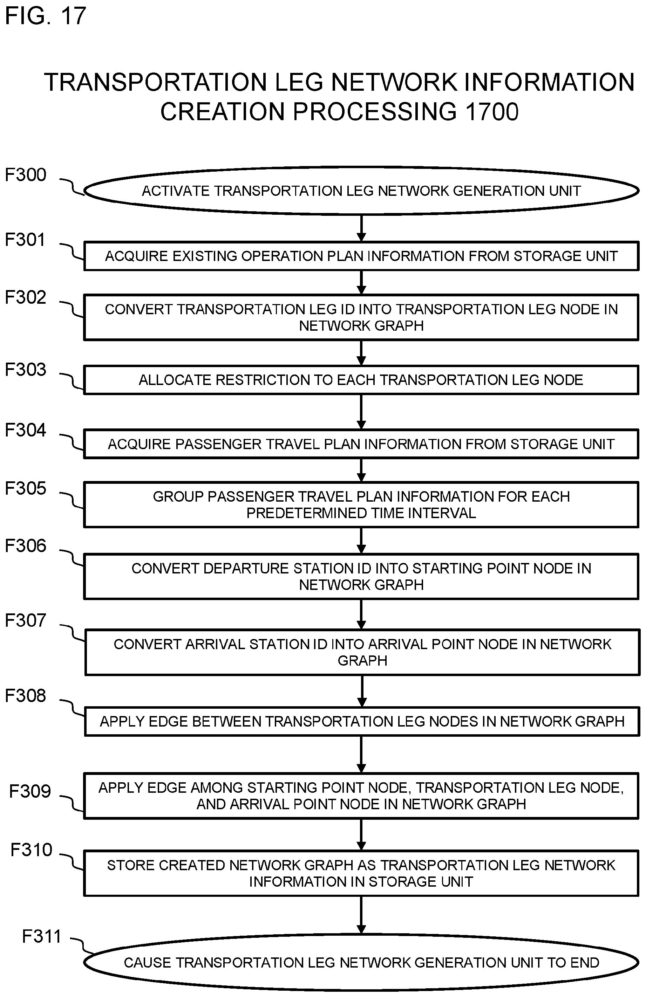

Note that details of the processing of generating the transportation leg network information 202D6 will be described with reference to FIG. 17, and the description thereof will thus be omitted here.

Next, in Step F203, the cancellation determination unit 201P2 acquires the maintenance information 202D2, the cancellation rule information 202D3, and the transportation leg network information 202D6 from the storage unit 202 and generates the transportation leg cancellation possibility information 202D7 that indicates whether or not cancellation of each transportation leg in the existing operation plan information 202D1 is possible.

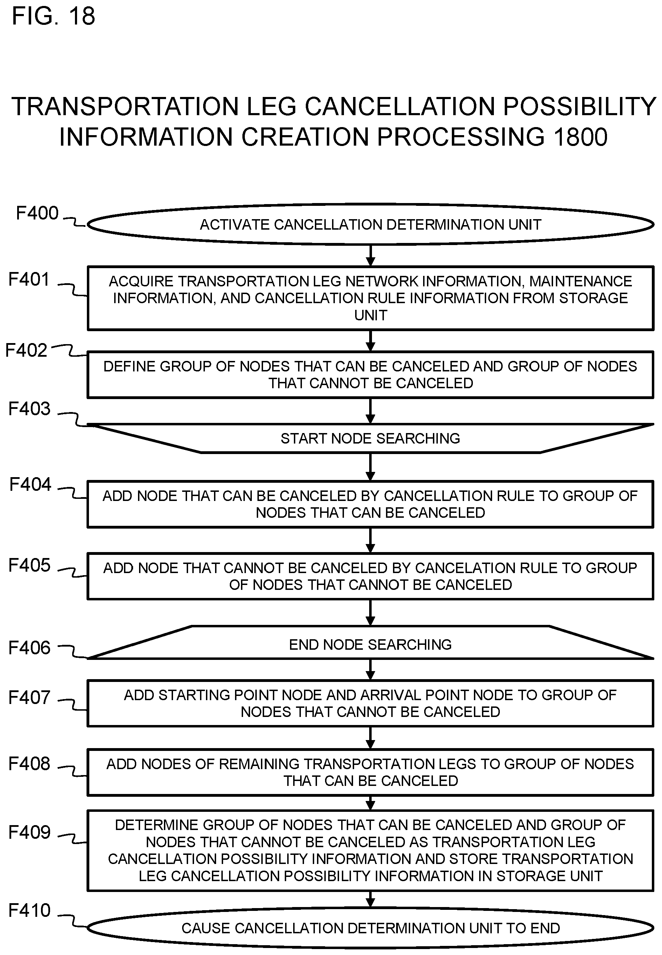

Note that details of the processing of generating the transportation leg cancellation possibility information 202D7 will be described with reference to FIG. 18, and the description thereof will thus be omitted here.

Next, in Step F204, the travel route candidate determination unit 201P3 acquires the travel preference information 202D4, the passenger travel plan information 202D5, and the transportation leg network information 202D6 from the storage unit 202, and generates, for each travel plan in the passenger travel plan information 202D5, the travel route candidate information 202D8 that indicates candidates for travel routes adapted to the travel preferences of the passengers by applying the travel preference information 202D4 to the transportation leg network information 202D6.

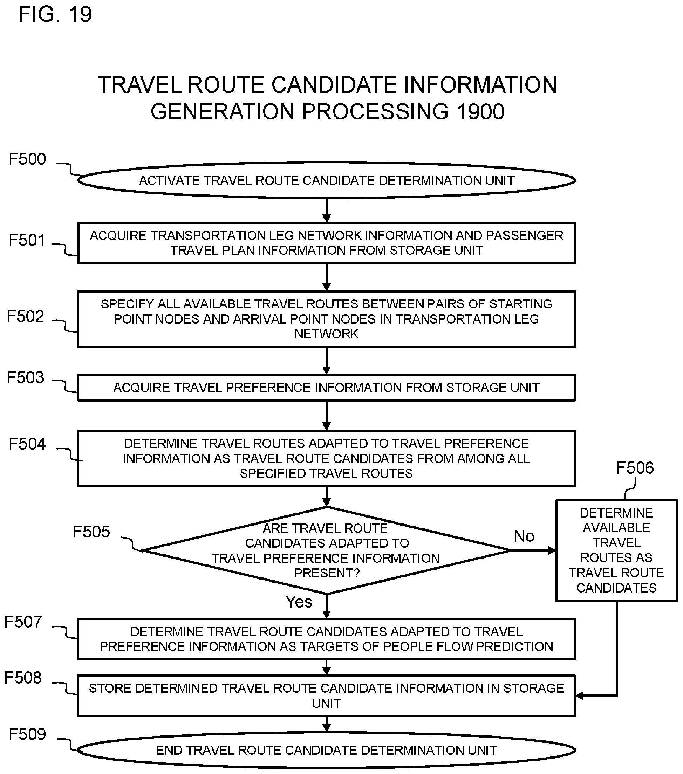

Note that details of the processing of generating the travel route candidate information 202D8 will be described with reference to FIG. 19, and description thereof will thus be omitted here.

Next, in Step F205, the operation plan creation application 201P acquires the target values of the KPIs set by the user in the aforementioned operation plan creation preparation processing 1500 from the KPI information table 1200 stored in the storage unit 202.

Next, in Step F206, the people flow prediction unit 201P5 acquires the transportation leg network information 202D6 and the travel route candidate information 202D8 from the storage unit and generates the people flow prediction information 202D11 that indicates a predicted people flow (the number of passengers) in the transportation service.

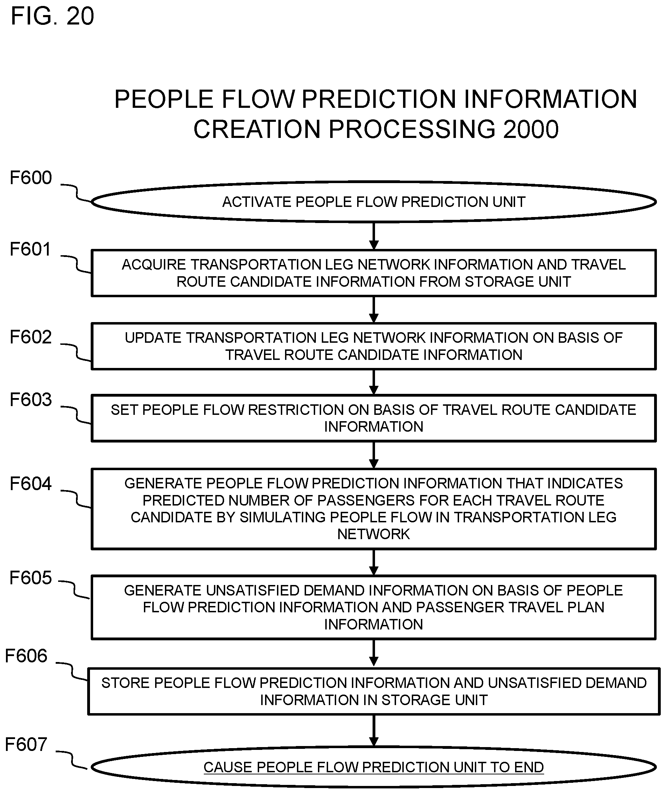

Note that details of the processing of generating the people flow prediction information 202D11 will be described with reference to FIG. 20, and the description thereof will thus be omitted here.

Next, in Step F207, the operation plan creation unit 201P4 acquires the transportation leg network information 202D6, the transportation leg cancellation possibility information 202D7, the unsatisfied demand information 202D10, and the people flow prediction information 202D11 from the storage unit 202 and generates the new operation plan information 202D9 in which certain transportation legs in the transportation service are eliminated on the basis of the acquired information.

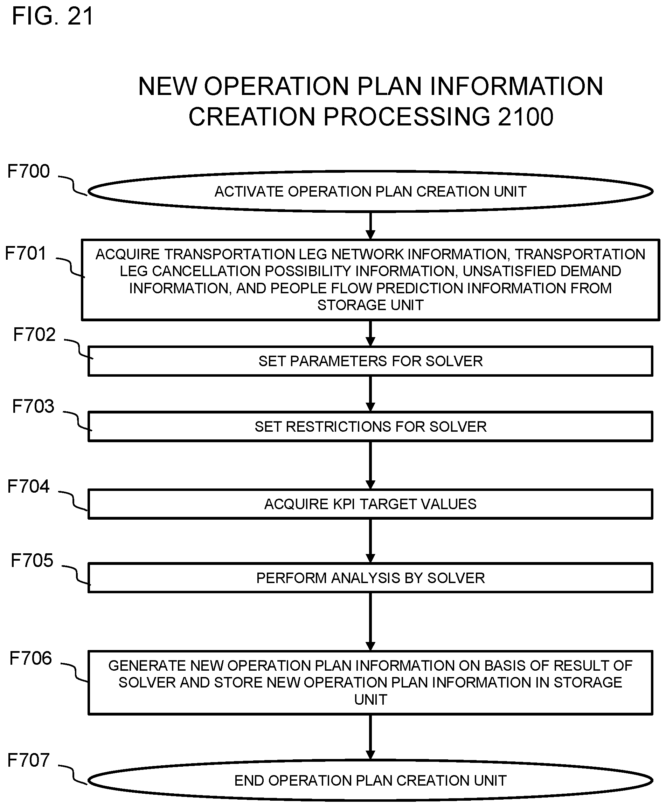

Note that details of the processing of generating the new operation plan information 202D9 will be described with reference to FIG. 21, and the description thereof will thus be omitted here.

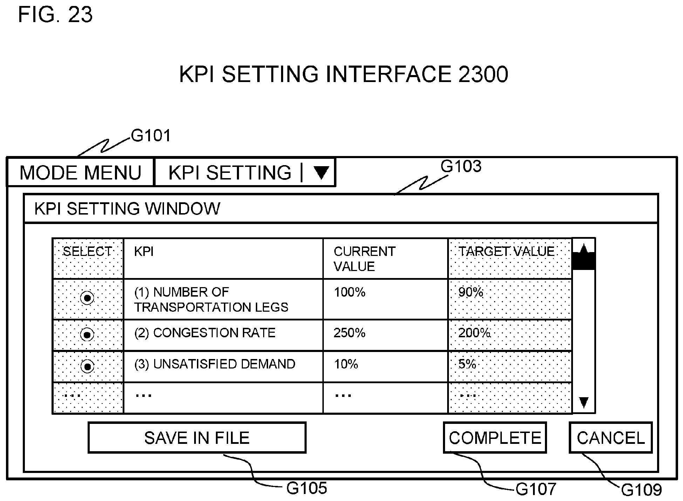

Next, in Step F208, the evaluation and visualization unit 201P6 performs evaluation on the new operation plan information 202D9 and displays a result of the evaluation and other various kinds of information used by the operation plan creation device 200 on a user interface (see FIGS. 23 to 26) such as a GUI.

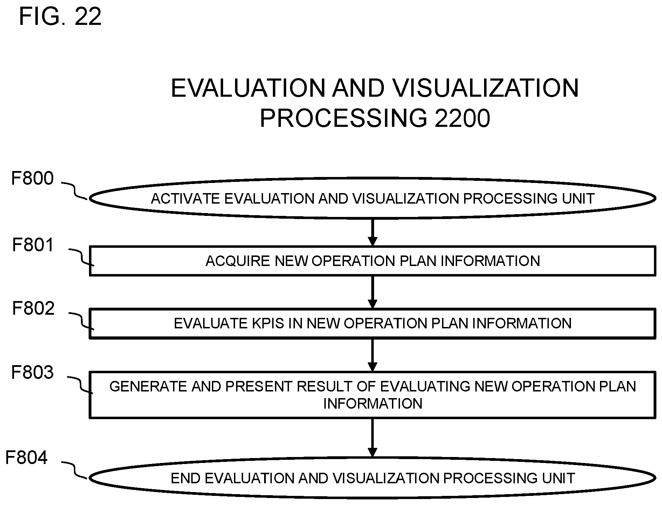

Note that details of the processing of presenting the new operation plan information 202D9 to the user will be described with reference to FIG. 22, and the description thereof will thus be omitted here.

Next, in Step F209, the evaluation and visualization unit 201P6 determines whether or not the new operation plan information 202D9 generated in Step F207 satisfies the KPI target values acquired in Step F205.

In a case where it is determined that the new operation plan information 202D9 satisfies the KPI target values, the processing proceeds to Step F210. On the other hand, in a case where it is determined that the new operation plan information 202D9 does not satisfy the KPI target values, the processing returns to Step F205, the user is encouraged to reset the target values of the KPIs, and the corrected target values of the KPIs are acquired again.

Next, in Step F210, the operation plan creation application 201P ends.

According to the operation plan creation processing 1600 described above, it is possible to generate an operation plan capable of improving passenger satisfaction with a transportation service and reducing operating costs for a transportation service provider by generating an operation plan suitable for actual travel demands in consideration of travel preferences of passengers of the transportation service.

Next, transportation leg network information creation processing according to the embodiment of the present disclosure will be described with reference to FIG. 17.

FIG. 17 is a diagram illustrating an example of a flow of transportation leg network information creation processing 1700 according to the embodiment of the present disclosure. The transportation leg network information creation processing 1700 is processing for generating transportation leg network information that indicates each transportation leg in the transportation service and may be performed by the transportation leg network generation unit 201P1 of the operation plan creation application 201P illustrated in FIG. 2.

First, in Step F300, the operation plan creation application 201P activates the transportation leg network generation unit 201P1.

Next, in Step F301, the transportation leg network generation unit 201P1 acquires the existing operation plan information 202D1 from the storage unit 202. The existing operation plan information 202D1 may be existing operation plan information input by the user of the transportation service provider 150 or the like in the aforementioned operation plan creation preparation processing 1500, for example.

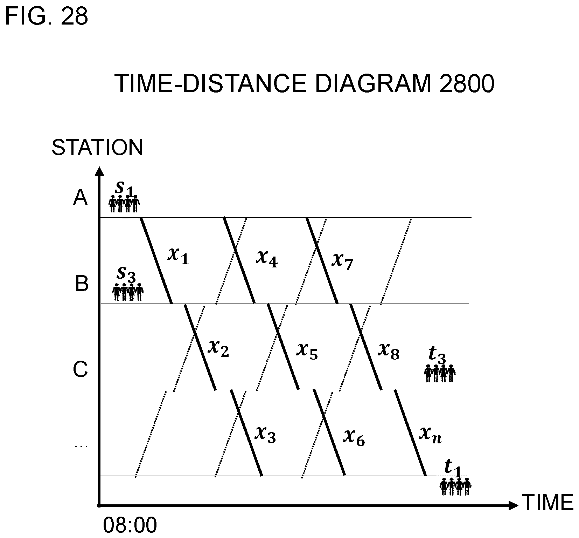

In some embodiments, the existing operation plan information 202D1 may be expressed as a time-distance diagram 2800 as illustrated in FIG. 28. FIG. 28 is a diagram illustrating an example of the existing operation plan information 202D1 as the time-distance diagram 2800. As illustrated in FIG. 28, the vertical axis represents stations (stations A, B, and C), the horizontal axis represents a time, and the oblique lines between the stations represent transportation legs ($x_1$ to $x_n$) in the time-distance diagram 2800.

Next, in Step F302, the transportation leg network generation unit 201P1 converts the transportation leg IDs in the existing operation plan information 202D1 into transportation leg nodes in the network graph in the graph format. The expression of converting the transportation leg IDs into the transportation leg nodes means that transportation leg nodes representing transportation legs identified by the transportation leg IDs are generated in the network graph in the graph format. Here, the transportation leg network generation unit 201P1 may allocate a transportation leg node ID in the "Tn_n" format to each transportation leg node as illustrated in the aforementioned table 610.

Next, in Step F303, the transportation leg network generation unit 201P1 allocates, to each transportation leg node created in the network graph in Step F302, information regarding a departure time, a departure station, an arrival time, an arrival station, a capacity, and costs of the transportation leg. Here, directionality of the transportation leg node may be set on the basis of departure times and arrival times of a preceding node and a following node.

Next, in Step F304, the transportation leg network generation unit 201P1 acquires the passenger travel plan information 202D5 from the storage unit 202.

Next, in Step F305, the transportation leg network generation unit 201P1 groups the passenger travel plan information acquired in Step F304 for each predetermined time interval (five minutes, ten minutes, or the like).

Next, in Step F306, the transportation leg network generation unit 201P1 converts departure station IDs in the passenger travel plan information into starting point nodes in the network graph. The expression of converting the departure station IDs into the starting point nodes means that starting point nodes representing stations identified by the departure station IDs are generated in the network graph in the graph format.

Next, in Step F307, the transportation leg network generation unit 201P1 converts arrival station IDs in the passenger travel plan information into arrival point nodes in the network graph. The expression of converting the arrival station IDs into the arrival point nodes means that arrival point nodes representing stations identified by the arrival station IDs are generated in the network graph in the graph format.

Next, in Step F308, the transportation leg network generation unit 201P1 applies edges between transportation leg nodes in the network graph.

Next, in Step F309, the transportation leg network generation unit 201P1 applies edges among the starting point nodes, the transportation leg nodes, and the arrival point nodes in the network graph.

Note that the application of the edges in Steps F308 and F309 may be performed on the basis of departure times from the starting point nodes and arrival times at the arrival point nodes of the transportation leg nodes. One example will be described with reference to the aforementioned transportation leg network information tables 610 and 620. Since the transportation leg node of "tn_0" has the same departure station ID (the departure station ID "1") as that of the starting point node of "s_0" and happens after the departure time of the starting point node of "s_0", an edge of connecting the transportation leg node of "tn_0" to the starting point node "s_0' may be applied in the network graph.

FIG. 29 is a diagram illustrating a transportation leg network graph 2900 that indicates, in the graph format, the transportation leg network information generated through the transportation leg network information creation processing 1700 according to the embodiment of the present disclosure.

As illustrated in FIG. 29, departure stations of the transportation legs are expressed as starting point nodes s1, s2, ..., sp2910, and arrival stations of the transportation legs are expressed as arrival point nodes t1, t2, ..., tp2920. Also, the transportation legs are expressed as transportation leg nodes $x_1$ to $x_n$2930. Moreover, the starting point nodes 2910, the arrival point nodes 2920, and the transportation leg nodes 2930 are connected by edges 2940 on the basis of departure times from the starting point nodes and arrival times at the arrival point nodes of the transportation leg nodes.

Next, in Step F310, the transportation leg network generation unit 201P1 stores the created network graph as the transportation leg network information 202D6 in a table format in the storage unit 202.

Next, in Step F311, the operation plan creation application 201P causes the transportation leg network generation unit 201P1 to end.

According to the transportation leg network information creation processing 1700 described above, it is possible to generate the transportation leg network information that indicates each transportation leg in the transportation service. It is possible to create an operation plan in consideration of preferences of the passengers in regard to traveling and cost effectiveness of the railway transportation service by handling the transportation leg network information as a so-called mixed integer linear problem (MILP) and analyzing the transportation leg network information by an optimization algorithm such as an exact method, a non-exact method, a branch cut method, a heuristic method, or a genetic algorithm.

Next, transportation leg cancellation possibility information creation processing according to the embodiment of the present disclosure will be described with reference to FIG. 18.

FIG. 18 is a diagram illustrating an example of a flow of transportation leg cancellation possibility information creation processing 1800 according to the embodiment of the present disclosure. The transportation leg cancellation possibility information creation processing 1800 is processing for generating the transportation leg cancellation possibility information 202D7 that indicates whether or not cancellation of each transportation leg is possible and may be performed by the cancellation determination unit 201P2 illustrated in FIG. 2.

First, in Step F400, the operation plan creation application 201P activates the cancellation determination unit 201P2.

Next, in Step F401, the cancellation determination unit 201P2 acquires the maintenance information 202D2, the cancellation rule information 202D3, and the transportation leg network information 202D6 from the storage unit 202.

Next, in Step F402, the cancellation determination unit 201P2 defines a group of nodes that can be canceled and a group of nodes that cannot be canceled as categories for categorizing the nodes in the transportation leg network information 202D6.

Next, in Step F403, the cancellation determination unit 201P2 starts node searching from the transportation leg network information 202D6. The node searching is processing for categorizing the nodes into either the group of nodes that can be canceled and the group of nodes that cannot be canceled by applying the cancellation rules indicated in the aforementioned cancellation rule information 202D3 to each node in the transportation leg network information 202D6 and may be performed on the transportation leg network graph that is illustrated in FIG. 29, for example, and indicates the transportation leg network information 202D6 in the graph format.

Next, in Step F404, the cancellation determination unit 201P2 adds, to the group of nodes that can be canceled, nodes determined to be able to be canceled by the cancellation rules indicated in the aforementioned cancellation rule information 202D3 from among the nodes in the transportation leg network graph that indicates the transportation leg network information 202D6 in the graph format. Here, the cancellation determination unit 201P2 may refer to the maintenance information table T200 illustrated in FIG. 4, the transportation leg network tables T600 and T610 illustrated in FIG. 8, or the station facility information table T1100 illustrated in FIG. 13 upon applying the cancellation rules to certain nodes.

In one example, the cancellation determination unit 201P2 may refer to the station facility information table T1100, and in a case where certain transportation leg nodes are determined to use stations equipped with stopping places, the cancellation determination unit 201P2 may add the transportation leg nodes to the group of nodes that can be canceled in accordance with the rule RC1 in the cancellation rule information table T300 illustrated in FIG. 5.

Next, in Step F405, the cancellation determination unit 201P2 adds, to the group of nodes that cannot be canceled, nodes that are determined not to be able to be canceled by the cancellation rules indicated in the aforementioned cancellation rule information 202D3 from among the nodes in the transportation leg network graph that indicates the transportation leg network information 202D6 in the graph format. As described above, the cancellation determination unit 201P2 may refer to the maintenance information table T200, the transportation leg network tables T600 and T610 illustrated in FIG. 8, or the station facility information table T1100 illustrated in FIG. 13 upon applying the cancellation rules to certain nodes.

In one example, the cancellation determination unit 201P2 may refer to the transportation leg network tables T600 and T610, and in a case where certain transportation leg nodes are determined to have high demands (the numbers of passengers are greater than a predetermined number of passengers), the cancellation determination unit 201P2 may add the transportation leg nodes to the group of nodes that cannot be canceled in accordance with the rule RC3 in the cancellation rule information table T300 illustrated in FIG. 5.

Next, in Step F406, the cancellation determination unit 201P2 ends the node searching.

Next, in Step F407, the cancellation determination unit 201P2 adds, to the group of nodes that cannot be canceled, the starting point nodes and the arrival point nodes in the transportation leg network graph that indicates the transportation leg network information 202D6 in the graph format. This is because the starting point nodes and the arrival point nodes correspond to "first trains" and "last trains" of the rule RC4 in the cancellation rule information table T300 illustrated in FIG. 5.

Next, in Step F408, the cancellation determination unit 201P2 adds, to the group of nodes that can be canceled, nodes of transportation legs that cannot be categorized into any of the group of nodes that can be canceled and the group of nodes that cannot be canceled through the aforementioned processing.

Next, in Step F409, the cancellation determination unit 201P2 generates the transportation leg cancellation possibility information 202D7 by consolidating the group of nodes that can be canceled and the group of nodes that cannot be canceled and stores the transportation leg cancellation possibility information 202D7 in the storage unit 202.

Next, in Step F410, the operation plan creation application 201P causes the cancellation determination unit 201P2 to end.

According to the transportation leg network information creation processing 1700 described above, it is possible to generate the transportation leg cancellation possibility information 202D7 that indicates candidates for transportation legs that can be canceled (such as transportation legs that have low demands) to reduce operating costs for the transportation service provider. As will be described later, it is possible to generate an operation plan suitable for actual travel demands by using the transportation leg cancellation possibility information 202D7.

Next, travel route candidate information creation processing according to the embodiment of the present disclosure will be described with reference to FIG. 19.

FIG. 19 is a diagram illustrating an example of a flow of travel route candidate information creation processing 1900 according to the embodiment of the present disclosure. The travel route candidate information creation processing 1900 is processing for generating the travel route candidate information 202D8 that indicates candidates for travel routes adapted to travel preferences of the passengers for each travel plan in the aforementioned passenger travel plan information 202D5 and may be performed by the travel route candidate determination unit 201P3 illustrated in FIG. 2.

First, in Step F500, the operation plan creation application 201P activates the travel route candidate determination unit 201P3.

Next, in Step F501, the travel route candidate determination unit 201P3 acquires the passenger travel plan information 202D5 and the transportation leg network information 202D6 from the storage unit 202.

Next, in Step F502, the travel route candidate determination unit 201P3 specifies all available travel routes between pairs of starting point nodes and arrival point nodes in the transportation leg network graph on the basis of the passenger travel plan information 202D5 and the transportation leg network information 202D6 acquired in Step F501. Here, the expression of all available travel routes means travel routes along which it is possible to arrive at the arrival point nodes from the starting point nodes.

Next, in Step F503, the travel route candidate determination unit 201P3 acquires the travel preference information 202D4 from the storage unit 202.

Next, in Step F504, the travel route candidate determination unit 201P3 determines, as travel route candidates, travel routes adapted to the travel preference information 202D4 of the passengers, from among all the available travel routes between the pairs of starting point nodes and the arrival point nodes specified in Step F502.

Here, the travel route candidate determination unit 201P3 can determine travel route candidates that satisfy the transportation leg utilization conditions in the travel preference information table T410 illustrated in FIG. 6, for example, by applying a network search algorithm such as breadth first search (BFS), depth first search (DFS), a Dijkstra's method, or an A* search algorithm, for example, to the transportation leg network graph.

In one example, the travel route candidate determination unit 201P3 may determine, as the travel route candidates, travel routes along which it is possible to arrive at destinations before predetermined clock times, travel routes in which congestion rates are less than a predetermined congestion rate, and travel routes along which it is possible to arrive at destinations within a predetermined number of transfers from among all the available travel routes between the pairs of starting point nodes and the arrival point nodes.

Next, in Step F505, the travel route candidate determination unit 201P3 determines whether or not travel route candidates adapted to the travel preference information 202D4 of the passengers have been specified between the pairs of starting point nodes and the arrival point nodes in the transportation leg network graph.

In a case where it is not possible to determine the travel route candidates adapted to the travel preference information 202D4 of the passengers in the transportation leg network graph in Step F504, the processing proceeds to Step F506.

In a case where it is possible to determine the travel route candidates adapted to the travel preference information 202D4 of the passengers in the transportation leg network graph in Step F504, the processing proceeds to Step F507.

Next, in Step F506, in the case where it is not possible to determine the travel route candidates adapted to the travel preference information 202D4 of the passengers in Step F504, the travel route candidate determination unit 201P3 determines the available travel routes specified in Step F502 as travel route candidates as targets of people flow prediction, which will be described later.

Thereafter, the processing proceeds to Step F508.

Next, in Step F507, in a case where it is possible to determine the travel route candidates adapted to the travel preference information 202D4 of the passengers in Step F504, the travel route candidate determination unit 201P3 determines the travel route candidates determined in Step F504 as travel route candidates as targets of people flow prediction, which will be described later.

Next, in Step F508, the travel route candidates determined as targets of the people flow prediction in Step F506 or Step F507 are stored as the aforementioned travel route candidate information 202D8 in the storage unit 202.

Next, in Step F509, the operation plan creation application 201P causes the travel route candidate determination unit 201P3 to end.

According to the travel route candidate information creation processing 1900 described above, it is possible to generate the travel route candidate information 202D8 that indicates candidates for the travel routes adapted to the travel preferences of the passengers for each travel plan in the aforementioned passenger travel plan information 202D5. Also, it is possible to generate an operation plan suitable for actual travel demands in consideration of preferences of the passengers related to traveling times, the numbers of transfers, and the like (that is, conditions under which the passengers use the transportation service, conditions under which the passengers give up the utilization of the transportation service, and the like) by performing people flow prediction (the people flow prediction information creation processing 2000, which will be described later) on the basis of the thus generated travel route candidate information 202D8.

Next, the people flow prediction information creation processing according to the embodiment of the present disclosure will be described with reference to FIG. 20.

FIG. 20 is a diagram illustrating an example of a flow of the people flow prediction information creation processing 2000 according to the embodiment of the present disclosure. The people flow prediction information creation processing 2000 is processing for generating the people flow prediction information 202D11 that indicates a predicted people flow in the transportation service and may be performed by the people flow prediction unit 201P5 illustrated in FIG. 2.

First, in Step F600, the operation plan creation application 201P activates the people flow prediction unit 201P5.

Next, in Step F601, the people flow prediction unit 201P5 acquires the transportation leg network information 202D6 and the travel route candidate information 202D8 from the storage unit 202.

Next, in Step F602, the people flow prediction unit 201P5 updates the transportation leg network information 202D6 (for example, the transportation leg network graph that indicates the transportation leg network information 202D6 in the graph format) on the basis of the travel route candidate information 202D8 acquired in Step F601. Here, the people flow prediction unit 201P5 may designate the travel route candidates indicated in the travel route candidate information 202D8 as targets of the people flow prediction in the transportation leg network information 202D6, or may generate a new transportation leg network graph including only the travel route candidates indicated in the travel route candidate information 202D8.

Next, in Step F603, the people flow prediction unit 201P5 sets a people flow limitation on the basis of the travel route candidate information 202D8. The people flow limitation is information to restrict a flow of passengers in the people flow prediction and may be restriction that defines that the number of input passengers (the number of passengers who start to travel from any of the starting point nodes in the transportation leg network) and the number of output passengers (the number of passengers who end the traveling at any of the arrival point nodes in the transportation leg network) become the same in people flow simulation, for example.

Next, in Step F604, the people flow prediction unit 201P5 predicts the number of passengers for each travel route candidate and generates the people flow prediction information 202D11 by performing the people flow simulation on the transportation leg network graph that has been generated in Step F602 and indicates the travel route candidates.

Here, the people flow prediction unit 201P5 can predict the number of passengers who will pass each node and the number of passengers for each travel route candidate by allocating a predetermined number of passengers to a starting point node of each travel route candidate in the transportation leg network graph and applying a linear solver using an exact method such as a so-called Ford-Fulkerson algorithm.

Next, in Step F605, the people flow prediction unit 201P5 generates the unsatisfied demand information 202D10 that indicates the number of passengers who are predicted to give up utilization of the transportation service because no travel routes adapted to the travel preference information 202D4 are present, on the basis of the people flow prediction information 202D11 generated in Step F604 and the aforementioned passenger travel plan information 202D5.

Here, the people flow prediction unit 201P5 may generate the unsatisfied demand information 202D10 that indicates the number of passengers who are predicted to give up utilization of the transportation service because no travel routes adapted to the travel preference information 202D4 are present by subtracting the predicted number of passengers (the first number of passengers) for each travel route candidate obtained as a result of the people flow simulation performed in Step F604 from the number of passengers (the second number of passengers) of the travel plans that are indicated in the existing operation plan information 202D1 and correspond to the travel routes.

Next, in Step F606, the people flow prediction unit 201P5 stores the people flow prediction information 202D11 generated in Step F604 in the storage unit 202. The people flow prediction information 202D11 is used to generate the new operation plan information 202D9 in new operation plan information creation processing 2100, which will be described later.

Next, in Step F607, the operation plan creation application 201P causes the people flow prediction unit 201P5 to end.

According to the people flow prediction information creation processing 2000 described above, it is possible to generate the people flow prediction information 202D11 that indicates the predicted number of passengers who will use each of the travel route candidates adapted to the travel preferences of the passengers. Also, it is possible to generate an operation plan suitable for actual travel demands in consideration of travel preferences of the passengers related to travel times, the numbers of transfers, and the like (that is, conditions under which the passengers use the transportation service, conditions under which the passengers give up the utilization of the transportation service, and the like) by using the thus generated people flow prediction information 202D11.

Next, the new operation plan information creation processing according to the embodiment of the present disclosure will be described with reference to FIG. 21.

FIG. 21 is a diagram illustrating an example of a flow of the new operation plan information creation processing 2100 according to the embodiment of the present disclosure. The new operation plan information creation processing 2100 is processing for generating the new operation plan information in which certain transportation legs in the transportation service are eliminated and may be performed by the operation plan creation unit 201P4 illustrated in FIG. 2.

First, in Step F700, the operation plan creation application 201P activates the operation plan creation unit 201P4.

Next, in Step F701, the operation plan creation unit 201P4 acquires the transportation leg network information 202D6, the transportation leg cancellation possibility information 202D7, the unsatisfied demand information 202D10, and the people flow prediction information 202D11 from the storage unit 202.

Next, in Step F702, the operation plan creation unit 201P4 analyzes various kinds of information acquired in Step F701 and performs parameter setting on the solver used to generate the new operation plan information 202D9. Here, the operation plan creation unit 201P4 may set the number of transportation legs, the congestion rates, and the unsatisfied demands as KPI parameters as optimization targets. The solver here is a solver to solve the optimization problem formulated as a mixed integer linear problem (MILP) and may be, for example, a Gurobi Optimizer. Also, in some embodiments, a satisficing trade off method (STOM) may be used in a case where the KPI optimization is formulated as a multi-objective optimization problem.

Next, in Step F703, the operation plan creation unit 201P4 sets restrictions related to the people flow and the cancellation rules in the solver on the basis of the transportation leg cancellation possibility information 202D7. Here, the operation plan creation unit 201P4 may set restrictions that define transportation legs that can be canceled and transportation legs that cannot be canceled, which are indicated in the transportation leg cancellation possibility information 202D7. In one example, the operation plan creation unit 201P4 may set a restriction to cancel transportation legs in which the numbers of passengers are less than 10% of capacities, a restriction to define capacities and lower limits and upper limits of demands and unsatisfied demands, and the like.

Here, the setting of the restrictions can further facilitate the generation of an operation plan that satisfies target values of the KPIs.

Next, in Step F704, the operation plan creation unit 201P4 acquires the KPI target values set in Step F104 in the aforementioned operation plan creation preparation processing 1500 from the storage unit 202.

Next, in Step F705, the operation plan creation unit 201P4 performs analysis by the solver that has set the parameters and the restrictions in Step F702 and Step F703. Here, the solver obtains a solution that minimizes the number of transportation legs while suppressing the congestion rates and the unsatisfied demands for an objective function including the number of transportation legs, the congestion rates, and the unsatisfied demands as optimization targets. Here, an example of the objective function formulated as MILP and to be optimized by the solver and the restrictions thereof is shown below.

[Expression 1]

$$Z + a \sum_{k \in K} W_k C_k$$

[Expression 2]

$$C_{\text{Number of transportation legs}} = \sum_{j \in V^t} c_j x_j$$

[Expression 3]

$$C_{\text{Unsatisfied demand}} = \sum_{s \in S} Z_s$$

[Expression 4]

$$C_{\text{Maximum congestion rate}} \geq \frac{1}{q_j} \sum_{i \in V_j^{in}} y_{ij}$$

[Expression 5]

$$w_k \left( C_k - \overline{f_k} \right) \leq Z, k \in K$$

Here, "i" and "j" denote nodes in the transportation leg network graph, C denotes a predetermined restriction, "x" is a variable that may be a value "1" or "0" depending on whether to execute or cancel the transportation legs, "$y_{ij}$" denotes the number of passengers traveling between the node i and the node j, and Z denotes an unsatisfied demand.

It is possible to obtain a solution that minimizes the number of transportation legs while suppressing the congestion rates and the unsatisfied demands by the analysis performed by the solver in Step F705. Next, in Step F706, the operation plan creation unit 201P4 generates the new operation plan information 202D9 based on the solution obtained as a result of the analysis performed by the solver in Step F705 and stores the new operation plan information 202D9 in the storage unit 202. As described above, the new operation plan information 202D9 indicates an operation plan in which the congestion rates, the unsatisfied demands, and the number of transportation legs are suppressed as compared with the existing operation plan information 202D1 illustrated in FIG. 3, for example.

Next, in Step F707, the operation plan creation application 201P causes the operation plan creation unit 201P4 to end.

Note that in some embodiments, the operation plan creation unit 201P4 can determine that the new operation plan information 202D9 is not acceptable in a case where it is determined that the unsatisfied demand information (that is, the number of passengers who are predicted to give up utilization of the transportation service because no travel routes adapted to the travel preference information 202D4 are present) exceeds a predetermined unsatisfied demand threshold value, and generate corrected operation plan information that has been corrected not to exceed the unsatisfied demand threshold value by adjusting the parameters and the restrictions of the solver. The unsatisfied demand threshold value here may be a value that indicates an upper limit of the acceptable number of unsupported passengers.

According to the new operation plan information creation processing 2100 described above, it is possible to generate the new operation plan information 202D9 that suppresses the congestion rates, the unsatisfied demands, and the number of transportation legs in consideration of the preferences of the passengers related to traveling times, the numbers of transfers, and the like (that is, the conditions under which the passengers use the transportation service, the conditions under which the passengers give up the utilization of the transportation service, and the like). Since the new operation plan information 202D9 is for indicating an operation plan in which transportation legs that do not satisfy a predetermined demand criterion (for example, transportation legs that have low demands) are eliminated while the number of passengers who give up the utilization of the transportation service because no transportation legs adapted to the travel preferences are present (unsatisfied demand) and the congestion rates are suppressed, it is possible to improve passenger satisfaction with the transportation service and to reduce operating costs for the transportation service provider as compared with the existing operation plan information 202D1 illustrated in FIG. 3, for example.

Also, since certain transportation legs are eliminated in the new operation plan information 202D9, it is possible to perform the people flow simulation on the new operation plan information 202D9 again and to determine a change in unsatisfied demands caused by the eliminated transportation legs.

Next, evaluation and visualization processing according to the embodiment of the present disclosure will be described with reference to FIG. 22.

FIG. 22 is a diagram illustrating an example of a flow of evaluation and visualization processing 2200 according to the embodiment of the present disclosure. The evaluation and visualization processing 2200 is processing of performing evaluation on the new operation plan information and displaying the result of the evaluation and other various kinds of information used by the operation plan creation device 200 on a user interface such as a GUI and is performed by the evaluation and visualization unit 201P6 illustrated in FIG. 2.

First, in Step F800, the operation plan creation application 201P activates the evaluation and visualization unit 201P6.

Next, in Step F801, the evaluation and visualization unit 201P6 acquires the new operation plan information 202D9 generated through the aforementioned new operation plan information creation processing 2100 from the storage unit 202.

Next, in Step F802, the evaluation and visualization unit 201P6 evaluates KPIs (the number of transportation legs, the congestion rates, and the unsatisfied demands) in the new operation plan information 202D9. Here, the evaluation and visualization unit 201P6 may evaluate the KPIs in the new operation plan information 202D9 by comparing the KPIs in the new operation plan information 202D9 with the KPI target values set by the user in the aforementioned operation plan creation preparation processing 1500, for example.

Next, in Step F803, the evaluation and visualization unit 201P6 generates a result of evaluating the new operation plan information that includes the result of the evaluation of the KPIs in the new operation plan information 202D9 performed in Step F802 and the travel route candidate information 202D8 generated through the aforementioned travel route candidate information creation processing 1900 and presents the result of evaluating the new operation plan information to the user via the GUI. Here, the evaluation and visualization unit 201P6 may display the result of evaluating the generated new operation plan information on the new operation plan information evaluation result interface 2500, which will be described later.

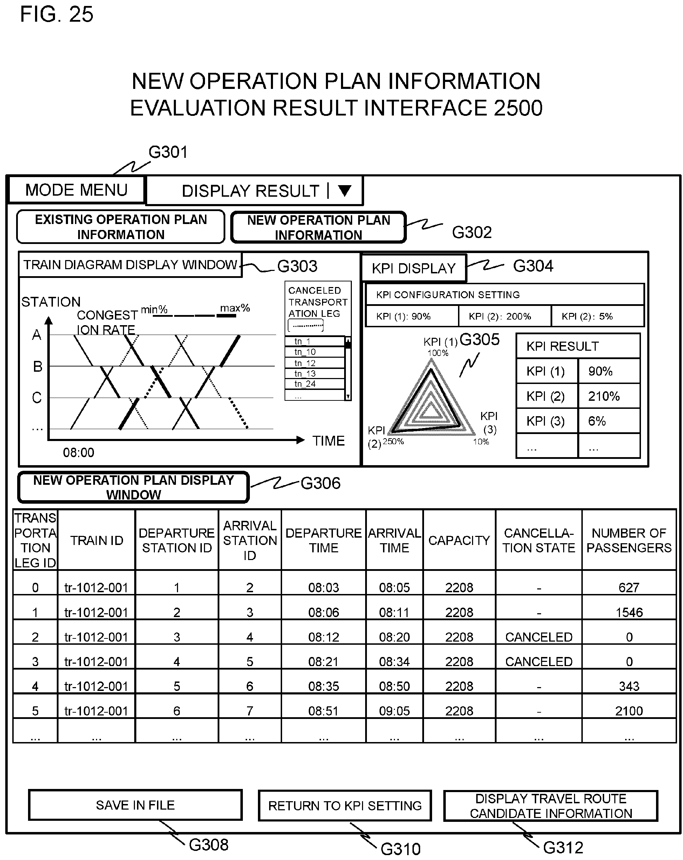

Note that as will be described later, the evaluation and visualization unit 201P6 may display, in addition to the new operation plan information evaluation result interface 2500 illustrated in FIG. 25, the KPI setting interface 2300, an existing operation plan information evaluation result interface 2400, and a travel route candidate information evaluation result interface 2600.

According to the evaluation and visualization processing 2200 described above, it is possible to provide the result of the evaluation performed on the new operation plan information and other various kinds of information used by the operation plan creation device 200 to the user of the transportation service provider 150 or the like.

Next, the KPI setting interface according to the embodiment of the present disclosure will be described with reference to FIG. 23.

FIG. 23 is a diagram illustrating an example of the KPI setting interface 2300 according to the embodiment of the present disclosure. The KPI setting interface 2300 is a graphical user interface (GUI) for setting KPIs for the operation plan and may be displayed on the display unit 204 of the aforementioned operation plan creation device or a screen of an external device.

As illustrated in FIG. 23, the KPI setting interface 2300 includes a mode menu G101 and a KPI setting window G103.

The mode menu G101 is a menu for switching a display screen of the GUI. According to the mode menu G101, it is possible to switch the GUI in a KPI setting mode for setting KPIs, a result display mode for displaying an evaluation result, and a transportation leg display mode for indicating transportation legs.

The KPI setting window G103 is a GUI window for setting KPIs for the operation plan and target values of the KPIs. As illustrated in FIG. 23, the KPI setting window G103 displays, for each KPI, a current value and a target value of the KPI. The user can perform inputs of new KPIs and settings of KPI target values on the KPI setting window G103.

In one example, the user may set a target value for each of the KPIs of the number of transportation legs, the congestion rates, and the unsatisfied demands.

Also, the user can save the set KPIs in a file by pressing a "save in file" button G105. It is possible to save the set KPIs and to cause the KPI setting to end by pressing a "complete" button G107. It is possible to cancel the set KPIs and to cause the KPI setting to end by pressing a "cancel" button G109.

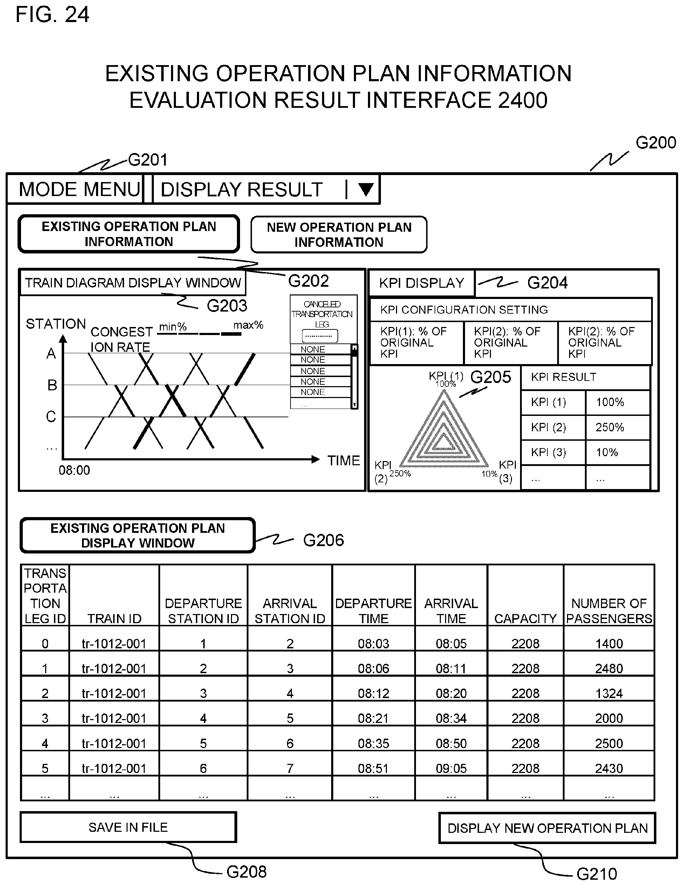

Next, the existing operation plan information evaluation result interface according to the embodiment of the present disclosure will be described with reference to FIG. 24.

FIG. 24 is a diagram illustrating an example of the existing operation plan information evaluation result interface 2400 according to the embodiment of the present disclosure. The existing operation plan information evaluation result interface 2400 is a GUI that indicates a result of evaluating the existing operation plan information generated by performing KPI evaluation on the existing operation plan information and may be displayed on the display unit 204 of the aforementioned operation plan creation device or a screen of an external device.

A mode menu G201 in the existing operation plan information evaluation result interface 2400 is a menu for switching the display screen of the GUI. According to the mode menu G201, it is possible to switch the GUI in the KPI setting mode for setting KPIs, a result display mode for displaying the evaluation result, and the transportation leg display mode for indicating transportation legs.

In a state where an existing operation plan information button G202 is selected, a train diagram display window G203 indicates a time-distance diagram (see the time-distance diagram 2800 illustrated in FIG. 28) that represents the existing operation plan information 202D1. As described above, the vertical axis represents stations, the horizontal axis represents a time, and the oblique lines represent the transportation legs in the time-distance diagram displayed in the train diagram display window G203. In FIG. 24, the thicknesses of the lines in the time-distance diagram indicate the congestion rates in the transportation legs. Moreover, the transportation legs that have been canceled are indicated on the right side of the time-distance diagram.

A KPI display G204 indicates the KPI evaluation result of the existing operation plan information. In some embodiments, the KPI display G204 may indicate the KPI evaluation result of the existing operation plan information in a radar chart G205, a table format, or the like.

Note that the KPI evaluation on the existing operation plan information may be performed substantially similarly to that on the new operation plan information described in FIG. 22 and is not particularly limited.

An operation plan display window G206 indicates the existing operation plan information 202D1 in a table format. Also, as illustrated in FIG. 24, the operation plan display window G206 may indicate, in addition to the existing operation plan information table T100 illustrated in FIG. 3, information regarding the predicted number of passengers for each transportation leg predicted through people flow prediction simulation performed on the existing operation plan information 202D1 or information regarding the number of passengers for each transportation leg that has actually been measured.

Also, the user can save the result of evaluating the existing operation plan information in a file by pressing a "save in file" button G208. Furthermore, the user can display the new operation plan information evaluation result interface 2500 illustrated in FIG. 25 by pressing a "display new operation plan" button G210.

Next, the new operation plan information evaluation result interface according to the embodiment of the present disclosure will be described with reference to FIG. 25.

FIG. 25 is a diagram illustrating an example of the new operation plan information evaluation result interface 2500 according to the embodiment of the present disclosure. The new operation plan information evaluation result interface 2500 is a GUI that indicates a result of evaluating the new operation plan information generated by performing KPI evaluation as in the evaluation and visualization processing 2200 illustrated in FIG. 22, for example, on the new operation plan information and may be displayed on the display unit 204 of the aforementioned operation plan creation device or a screen of an external device.

A mode menu G301 in the new operation plan information evaluation result interface 2500 is a menu for switching a display screen of the GUI. According to the mode menu G301, it is possible to switch the GUI in the KPI setting mode for setting KPIs, the result display mode for displaying an evaluation result, and the transportation leg display mode for indicating transportation legs.

In a state where a new operation plan information button G302 is selected, the train diagram display window G303 indicates the time-distance diagram (see the time-distance diagram 2800 illustrated in FIG. 28) that represents the new operation plan information 202D9. In the time-distance diagram displayed in the train diagram display window G303, the vertical axis represents stations, the horizontal axis represents a time, and the oblique lines represent transportation legs. In FIG. 25, the thicknesses of the lines in the time-distance diagram indicate congestion rates in the transportation legs. Also, the transportation legs that have been canceled are indicated on the right side of the time-distance diagram.

A KPI display G304 indicates a KPI evaluation result of the new operation plan information. In some embodiments, the KPI display G304 may indicate the KPI evaluation result of the new operation plan information in a radar chart G305, a table format, or the like. As described above, the KPI evaluation result of the new operation plan information indicated in the KPI display G304 can be obtained by performing KPI evaluation as in the evaluation and visualization processing 2200 illustrated in FIG. 22 on the new operation plan information.

An operation plan display window G306 indicates the new operation plan information 202D9 in a table format.

The user can save the result of evaluating the new operation plan information in a file by pressing a "save in file" button G308. Also, the user can return the KPI setting interface 2300 illustrated in FIG. 23 and reset the target values of the KPIs and the like by pressing a "return to KPI setting" button 310. Furthermore, the user can move on to the travel route candidate information evaluation result interface 2600 illustrated in FIG. 26 by pressing a "display travel route candidate information" button G312.

Next, the travel route candidate information evaluation result interface according to the embodiment of the present disclosure will be described with reference to FIG. 26.

FIG. 26 is a diagram illustrating an example of the travel route candidate information evaluation result interface 2600 according to the embodiment of the present disclosure. The travel route candidate information evaluation result interface 2600 is a GUI that indicates information related to the travel route candidate information 202D8 and may be displayed on the display unit 204 of the aforementioned operation plan creation device or a screen of an external device.

A mode menu G401 in the travel route candidate information evaluation result interface 2600 is a menu for switching a display screen of the GUI. According to the mode menu G401, it is possible to switch the GUI in the KPI setting mode for setting KPIs, the result display mode for displaying an evaluation result, and the transportation leg display mode for indicating transportation legs.

A travel preference setting window G402 is a menu for setting information related to travel preferences. Travel route candidate information in accordance with the travel preferences set in the travel preference setting window G402 is displayed on the travel route candidate information evaluation result interface 2600.

A filter setting display window G403 is a menu for narrowing down travel route candidates to be displayed on the basis of conditions such as a departure station, an arrival station, a departure clock time, an arrival clock time, and the like.

A result display button G404 is a button for displaying travel route candidate information that matches the conditions set in the travel preference setting window G402 and the filter setting display window G403.

The travel route candidate window G405 is a GUI window for indicating travel routes that match the conditions set in the travel preference setting window G402 and the filter setting display window G403 in a travel route candidate diagram G407 indicated for each passenger group selected in a passenger group selection menu G409 or in a travel route candidate list G408. The travel route candidate diagram G407 is a time-distance diagram in which stations are represented by the vertical line, a time is represented by the horizontal axis, and the transportation legs are represented by the oblique lines. Also, the numbers in the brackets beside the oblique lines indicate the numbers of passengers in the transportation legs.

A KPI display G406 indicates a KPI evaluation result of the travel route candidate information. As illustrated in FIG. 26, the KPI display G406 may include a KPI analysis graph G410 that indicates, in a graph format, a rate of utilization of each travel route based on the number of passengers in the existing operation plan information 202D1, the number of passengers in the new operation plan information 202D9, and the number of passengers obtained through people flow simulation in consideration of the transportation legs that have been eliminated in the new operation plan information 202D9.

In a state where an all travel routes button G411 is selected, the transportation leg cancellation possibility information 202D7 including information related to the transportation legs, train IDs, cancellation statuses, and the numbers of passengers may be displayed for all the travel routes.

On the other hand, in a state where a filtered travel routes button G412 is selected, it is possible to display the transportation leg cancellation possibility information 202D7 related only to travel routes that match the conditions set in the filter setting display window G403.

In the travel route candidate information window G413, the aforementioned travel route candidate information 202D8 is displayed.

The user can save the result of evaluating the travel route candidate information in a file by pressing a "save in file" button G414. Also, the user can cause the analysis on the existing operation plan information 202D1, the new operation plan information 202D9, and the travel route candidate information 202D8 to end by pressing an "end analysis" button G415.

According to the travel route candidate information evaluation result interface 2600 described above, it is possible to visualize and display recommended travel routes in accordance with changes in travel preferences of the passengers. Also, it is possible to generate an operation plan that responds to variations in travel demands by using the information regarding the travel routes in consideration of the travel preferences of the passengers in this manner and to thereby improve cost effectiveness of the operation and passenger satisfaction.

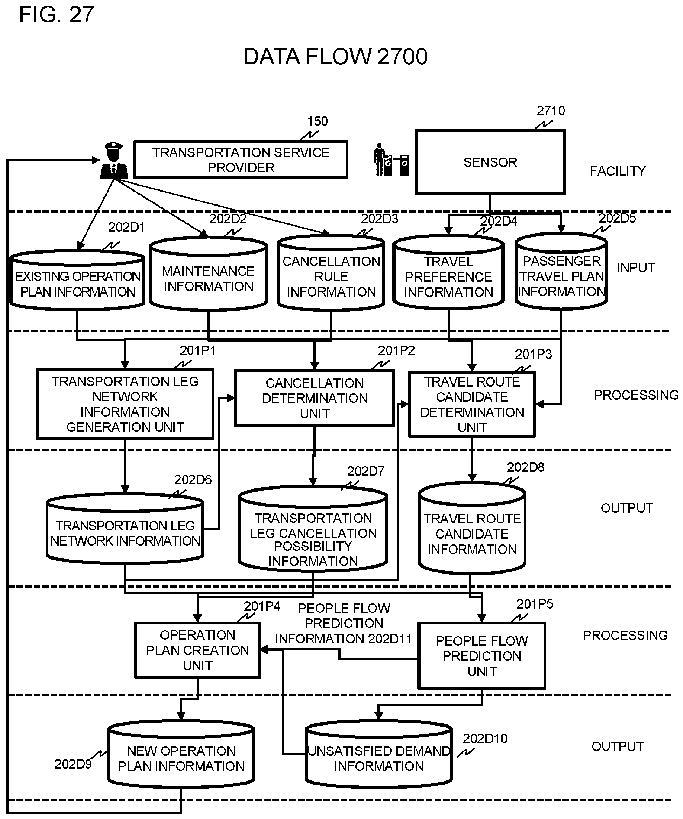

Next, a data flow in the operation plan creation system according to the embodiment of the present disclosure will be described with reference to FIG. 27.

FIG. 27 is a diagram illustrating a flow of a data flow 2700 in the operation plan creation system 50 according to the embodiment of the present disclosure.

First, the operation plan creation device 200 acquires the existing operation plan information 202D1, the maintenance information 202D2, and the cancellation rule information 202D3 from the transportation service provider 150, acquires the travel preference information 202D4 and the passenger travel plan information 202D5 from a sensor 2710 such as a ticket gate installed in the transportation service, and stores the acquired information in the storage unit 202 (not illustrated in FIG. 27).

The transportation leg network generation unit 201P1 performs the transportation leg network information creation processing 1700 on the basis of the existing operation plan information 202D1 and the passenger travel plan information 202D5, generates the transportation leg network information 202D6, and stores the transportation leg network information 202D6 in the storage unit 202.

The cancellation determination unit 201P2 performs the transportation leg cancellation possibility information creation processing 1800 on the basis of the maintenance information 202D2, the cancellation rule information 202D3, and the transportation leg network information 202D6, generates the transportation leg cancellation possibility information 202D7, and stores the transportation leg cancellation possibility information 202D7 in the storage unit 202.

The travel route candidate determination unit 201P3 performs the travel route candidate information creation processing 1900 on the basis of the travel preference information 202D4, the passenger travel plan information 202D5, and the transportation leg network information 202D6, generates the travel route candidate information 202D8, and stores the travel route candidate information 202D8 in the storage unit 202.

The people flow prediction unit 201P5 performs the people flow prediction information creation processing 2000 on the basis of the transportation leg network information 202D6 and the travel route candidate information 202D8 and stores the people flow prediction information 202D11 and the unsatisfied demand information 202D10 in the storage unit 202.

The operation plan creation unit 201P4 performs the new operation plan information creation processing 2100 on the basis of the transportation leg network information 202D6, the transportation leg cancellation possibility information 202D7, the unsatisfied demand information 202D10, and the people flow prediction information 202D11, generates the new operation plan information 202D9, and stores the new operation plan information 202D9 in the storage unit 202.

The operation plan creation device 200 transmits the new operation plan information 202D9 to the transportation service provider 150. Note that here, the operation plan creation device 200 may perform the aforementioned evaluation and visualization processing and transmit an evaluation result generated in regard to the new operation plan information along with the new operation plan information 202D9 to the transportation service provider 150.

As described above, determination regarding whether or not the passengers will use a transportation service upon using the transportation service typically depends on preference of the passengers. The passengers may give up the utilization of the transportation service in a case where there are no travel routes or transportation legs suitable for the travel preferences.

However, the operation plan creation means in the related art as in Patent Literature 1 uses a result of predicting travel demands based on travel histories of the passengers in the past, and preferences of the passengers related to traveling times, the numbers of transfers, and the like are thus not taken into consideration. Since actual action trends of the passengers are not reflected to such a result of predicting travel demands, accuracy may be limited, and the result may not accurately indicate actual travel demands.

On the other hand, in an aspect of the operation plan creation means according to the embodiment of the present disclosure, the people flow simulation is performed on the travel routes determined on the basis of the travel preferences of the passengers related to the traveling times, the degrees of congestion, the numbers of transfers, and the like. It is possible to obtain a result of predicting a people flow that reflects actual travel trend of the passengers in consideration of the conditions under which the passengers use the transportation service, the conditions under which the passengers give up the utilization of the transportation service, and the like by performing the people flow simulation on the travel routes determined on the basis of the travel preferences of the passengers. Also, it is possible to recognize the number of passengers who give up the utilization of the transportation service because no transportation legs adapted to the travel preferences of the passengers are present (unsatisfied demand) in the people flow simulation.

Furthermore, it is possible to create an operation plan in which transportation legs that have low demands are eliminated with priority while the congestion rates and the unsatisfied demands are suppressed, by using the thus generated result of predicting the people flow. The transportation service provider such as a railway business operator can provide a transportation service suitable for actual demands by using the thus created operation plan and can thereby reduce operating costs required for the transportation legs that have low demands and enhance business efficiency. Moreover, the passengers who are users of the transportation service can use transportation legs with low degrees of congestion and transportation legs with short traveling times to destinations and can thereby improve satisfaction with the transportation service.

In this manner, according to the present disclosure, it is possible to provide an operation plan creation means capable of improving passenger satisfaction with a transportation service and reducing operating costs for a transportation service provider by generating an operation plan suitable for actual travel demands in consideration of travel preferences of passengers of the transportation service.

As described above, the operation plan creation means according to the embodiment of the present disclosure includes the following aspects.

(Aspect 1)

An operation plan creation device including:

a processor; a memory; and a storage unit,
in which the storage unit includes

existing operation plan information that indicates an existing operation plan related to a transportation service,
passenger travel plan information that indicates travel plans of passengers who use the transportation service,
travel preference information that indicates travel preferences of the passengers of the transportation service, and
cancellation rule information that indicates cancellation rules in the transportation service, and

the memory includes processing commands for causing the processor to function as

a transportation leg network generation unit that generates transportation leg network information that defines each transportation leg in the transportation service on the basis of the existing operation plan information and the passenger travel plan information,
a cancellation determination unit that generates transportation leg cancellation possibility information that indicates whether or not cancellation of each transportation leg in the transportation service is possible on the basis of the transportation leg network information and the cancellation rule information,
a travel route candidate determination unit that generates travel route candidate information that indicates a travel route candidate for each travel plan in the passenger travel plan information on the basis of the transportation leg network information, the passenger travel plan information, and the travel preference information,
a people flow prediction unit that generates people flow prediction information that indicates a predicted people flow in the transportation service on the basis of the transportation leg network information and the travel route candidate information, and

an operation plan generation unit that generates new operation plan information in which certain transportation legs in the transportation service are eliminated, on the basis of the transportation leg network information, the transportation leg cancellation possibility information, and the people flow prediction information.

(Aspect 2)

The operation plan creation device according to Aspect 1,
in which the transportation leg network generation unit

generates a transportation leg network graph by converting the existing operation plan information into a graph format including a location of departure as a starting point node and a location of arrival as an arrival point node, and generates the transportation leg network information by reflecting the passenger travel plan information to the transportation leg network graph.

(Aspect 3)

The operation plan creation device according to Aspect 1 or 2,
in which the cancellation determination unit
generates the transportation leg cancellation possibility information that indicates transportation legs that satisfy the cancellation rules in the cancellation rule information as transportation legs that are able to be canceled and indicates transportation legs that do not satisfy the cancellation rules as transportation legs that are not able to be canceled, by analyzing the transportation leg network information on the basis of the cancellation rule information.

(Aspect 4)

The operation plan creation device according to Aspect 3,
in which the cancellation rules in the cancellation rule information

indicate that transportation legs where stopping places are available are able to be canceled, and
indicate that transportation legs where the numbers of passengers satisfy a predetermined demand threshold value are not able to be canceled.

(Aspect 5)

The operation plan creation device according to any one of Aspects 1 to 4,
in which the travel route candidate determination unit

determines, for each travel plan in the passenger travel plan information, available travel routes for the travel plan on the basis of the transportation leg network information,
specifies a travel route candidate that satisfies preference conditions in the travel preference information from among the available travel routes by analyzing the determined available travel routes on the basis of the travel preference information, and
generates the specified travel route candidate as the travel route candidate information.

(Aspect 6)

The operation plan creation device according to Aspect 5,
in which the travel preference information
indicates a preference condition related to a traveling time, a preference condition related to a degree of congestion, and a preference condition of giving up utilization of the transportation service.

(Aspect 7)

The operation plan creation device according to any one of Aspects 1 to 6,
in which the people flow prediction unit

calculates, for each travel route candidate in the travel route candidate information, a first number of passengers who are predicted to use the travel route candidate,
calculates a second number of passengers of a travel plan corresponding to the travel route candidate on the basis of the passenger travel plan information, and
generates a difference between the first number of passengers and the second number of passengers as unsatisfied demand information that is predicted to give up utilization of the transportation service because no travel routes adapted to the travel preference information are present.

(Aspect 8)

The operation plan creation device according to Aspect 7,
in which

in a case where the unsatisfied demand information exceeds a predetermined unsatisfied demand threshold value, the operation plan generation unit generates corrected operation plan information that has been corrected such that the unsatisfied demand information is equal to or less than the unsatisfied demand threshold value.

Although the embodiment of the present invention has been described hitherto, the present invention is not limited to the aforementioned embodiment, and various modifications can be made without departing from the gist of the present invention.

[Reference Signs List]

50: Operation plan creation system, 100: Passenger travel plan information acquisition device, 150: Transportation service provider, 151: Moving object, 152: Transportation service infrastructure, 200: Operation plan creation device, 201: Memory, 201P: Operation plan creation application, 201P1: Transportation leg network generation unit, 201P2: Cancellation determination unit, 201P3: Travel route candidate determination unit, 201P4: Operation plan creation unit, 201P5: People flow prediction unit, 201P6: Evaluation and visualization unit, 202: Storage unit, 202D1: Existing operation plan information, 202D2: Maintenance information, 202D3 Cancellation rule information, 202D4: Travel preference information, 202D5: Passenger travel plan information, 202D6: Transportation leg network information, 202D7: Transportation leg cancellation possibility information, 202D8: Travel route candidate information, 202D9: New operation plan information, 202D10: Unsatisfied demand information, 202D11: People flow prediction information, 203: CPU, 204: Display unit, 205: Communication unit, 300: Traffic management device, 350: Communication network

**Claims**

1. An operation plan creation device comprising:

 a processor; a memory; and a storage unit,
 wherein the storage unit includes

 existing operation plan information that indicates an existing operation plan related to a transportation service,
 passenger travel plan information that indicates travel plans of passengers who use the transportation service,
 travel preference information that indicates travel preferences of the passengers of the transportation service, and
 cancellation rule information that indicates cancellation rules in the transportation service, and

 the memory includes processing commands for causing the processor to function as

 a transportation leg network generation unit that generates transportation leg network information that defines each transportation leg in the transportation service on the basis of the existing operation plan information and the passenger travel plan information,
 a cancellation determination unit that generates transportation leg cancellation possibility information that indicates whether or not cancellation of each transportation leg in the transportation service is possible on the basis of the transportation leg network information and the cancellation rule information,
 a travel route candidate determination unit that generates travel route candidate information that indicates a travel route candidate for each travel plan in the passenger travel plan information on the basis of the transportation leg network information, the passenger travel plan information, and the travel preference information,
 a people flow prediction unit that generates people flow prediction information that indicates a predicted people flow in the transportation service on the basis of the transportation leg network information and the travel route candidate information, and

 an operation plan generation unit that generates new operation plan information in which certain transportation legs in the transportation service are eliminated, on the basis of the transportation leg network information, the transportation leg cancellation possibility information, and the people flow prediction information.

2. The operation plan creation device according to claim 1,
 wherein the transportation leg network generation unit

 generates a transportation leg network graph by converting the existing operation plan information into a graph format including a location of departure as a starting point node and a location of arrival as an arrival point node, and
 generates the transportation leg network information by reflecting the passenger travel plan information to the transportation leg network graph.

3. The operation plan creation device according to claim 1,
 wherein the cancellation determination unit
 generates the transportation leg cancellation possibility information that indicates transportation legs that satisfy the cancellation rules in the cancellation rule information as transportation legs that are able to be canceled and indicates transportation legs that do not satisfy the cancellation rules as transportation legs that are not able to be canceled, by analyzing the transportation leg network information on the basis of the cancellation rule information.

4. The operation plan creation device according to claim 3,
 wherein the cancellation rules in the cancellation rule information

indicate that transportation legs where stopping places are available are able to be canceled, and
indicate that transportation legs where the numbers of passengers satisfy a predetermined demand threshold value are not able to be canceled.

5. The operation plan creation device according to claim 1,
wherein the travel route candidate determination unit

determines, for each travel plan in the passenger travel plan information, available travel routes for the travel plan on the basis of the transportation leg network information,
specifies a travel route candidate that satisfies preference conditions in the travel preference information from among the available travel routes by analyzing the determined available travel routes on the basis of the travel preference information, and
generates the specified travel route candidate as the travel route candidate information.

6. The operation plan creation device according to claim 5,
wherein the travel preference information
indicates a preference condition related to a traveling time, a preference condition related to a degree of congestion, and a preference condition of giving up utilization of the transportation service.

7. The operation plan creation device according to claim 1,
wherein the people flow prediction unit

calculates, for each travel route candidate in the travel route candidate information, a first number of passengers who are predicted to use the travel route candidate,
calculates a second number of passengers of a travel plan corresponding to the travel route candidate on the basis of the passenger travel plan information, and
generates a difference between the first number of passengers and the second number of passengers as unsatisfied demand information that is predicted to give up utilization of the transportation service because no travel routes adapted to the travel preference information are present.

8. The operation plan creation device according to claim 7,
wherein

in a case where the unsatisfied demand information exceeds a predetermined unsatisfied demand threshold value,
the operation plan generation unit generates corrected operation plan information that has been corrected such that the unsatisfied demand information is equal to or less than the unsatisfied demand threshold value.

9. An operation plan creation system comprising:

a transportation service provider terminal that provides a transportation service, and
an operation plan creation device that generates an operation plan for managing transportation legs in the transportation service, the transportation service provider terminal and the operation plan creation device being connected via a communication network,
wherein the operation plan creation device includes
a processor, a memory, and a storage unit,
the storage unit includes

existing operation plan information that indicates an existing operation plan related to the transportation service,
passenger travel plan information that indicates travel plans of passengers who use the transportation service,
travel preference information that indicates travel preferences of the passengers of the transportation service, and
cancellation rule information that indicates cancellation rules in the transportation service, and

the memory includes processing commands for causing the processor to function as

a transportation leg network generation unit that generates transportation leg network information that defines each transportation leg in the transportation service on the basis of the existing operation plan information and the passenger travel plan information,

a cancellation determination unit that generates transportation leg cancellation possibility information that indicates whether or not cancellation of each transportation leg in the transportation service is possible on the basis of the transportation leg network information and the cancellation rule information,

a travel route candidate determination unit that generates travel route candidate information that indicates a travel route candidate for each travel plan in the passenger travel plan information on the basis of the transportation leg network information, the passenger travel plan information, and the travel preference information,

a people flow prediction unit that generates people flow prediction information that indicates a predicted people flow in the transportation service on the basis of the transportation leg network information and the travel route candidate information, and

an operation plan generation unit that generates new operation plan information in which certain transportation legs in the transportation service are eliminated, on the basis of the transportation leg network information, the transportation leg cancellation possibility information, and the people flow prediction information and transmits the new operation plan information to the transportation service provider terminal.

10. An operation plan creation method that is executed by an operation plan creation device including

a processor,
a memory that stores processing commands, and
a storage unit,
the storage unit including

existing operation plan information that indicates an existing operation plan related to a transportation service,
passenger travel plan information that indicates travel plans of passengers who use the transportation service,
travel preference information that indicates travel preferences of the passengers of the transportation service, and
cancellation rule information that indicates cancellation rules in the transportation service, and

the method comprising:
causing, by the processing commands stored in the memory, the processor to execute

a process of generating a transportation leg network graph by converting the existing operation plan information into a graph format including a location of departure as a starting point node and a location of arrival as an arrival point node,
a process of generating transportation leg network information that defines each transportation leg in the transportation service by reflecting the passenger travel plan information to the transportation leg network graph,
a process of generating transportation leg cancellation possibility information that indicates transportation legs that satisfy the cancellation rules in the cancellation rule information as transportation legs that are able to be canceled and indicates transportation legs that do not satisfy the cancellation rules as transportation legs that are not able to be canceled, by analyzing the transportation leg network information on the basis of the cancellation rule information,
a process of determining, for each travel plan in the passenger travel plan information, available travel routes for the travel plan on the basis of the transportation leg network information,
a process of specifying a travel route candidate that satisfies preference conditions in the travel preference information from among the available travel routes by analyzing the determined available travel routes on the basis of the travel preference information,
a process of generating the specified travel route candidate as travel route candidate information,
a process of generating people flow information that indicates the number of passengers who are predicted to use the travel route candidate for each travel route candidate in the travel route candidate information and unsatisfied demand information that indicates the numbers of unsupported passengers who are predicted to give up utilization of the transportation service because no travel routes adapted to the travel preference information are present, on the basis of the transportation leg network information and the travel route candidate information, and

a process of generating new operation plan information in which the number of the unsupported passengers is reduced and certain transportation legs in the transportation service are eliminated.

## FIG. 1

## OPERATION PLAN CREATION SYSTEM 50

PASSENGER TRAVEL PLAN INFORMATION ACQUISITION DEVICE 100

MONITORING

OPERATION PLAN CREATION DEVICE 200

OPERATION PLAN INFORMATION

TRAFFIC MANAGEMENT DEVICE 300

CONTROL

TRANSPORTATION SERVICE PROVIDER 150

MOVING OBJECT 151

TRANSPORTATION SERVICE INFRASTRUCTURE 152

FIG. 2

# OPERATION PLAN CREATION DEVICE 200

OPERATION PLAN CREATION DEVICE

201

MEMORY — 201P

OPERATION PLAN CREATION APPLICATION

| TRANSPORTATION LEG NETWORK GENERATION UNIT | 201P1 |
| CANCELLATION DETERMINATION UNIT | 201P2 |
| TRAVEL ROUTE CANDIDATE DETERMINATION UNIT | 201P3 |
| OPERATION PLAN CREATION UNIT | 201P4 |
| PEOPLE FLOW PREDICTION UNIT | 201P5 |
| EVALUATION AND VISUALIZATION UNIT | 201P6 |

STORAGE UNIT

| EXISTING OPERATION PLAN INFORMATION | 202D1 |
| MAINTENANCE INFORMATION | 202D2 |
| CANCELLATION RULE INFORMATION | 202D3 |
| TRAVEL PREFERENCE INFORMATION | 202D4 |
| PASSENGER TRAVEL PLAN INFORMATION | 202D5 |
| TRANSPORTATION LEG NETWORK INFORMATION | 202D6 |
| TRANSPORTATION LEG CANCELLATION POSSIBILITY INFORMATION | 202D7 |
| TRAVEL ROUTE CANDIDATE INFORMATION | 202D8 |
| NEW OPERATION PLAN INFORMATION | 202D9 |
| UNSATISFIED DEMAND INFORMATION | 202D10 |
| PEOPLE FLOW PREDICTION INFORMATION | 202D11 |

202

CPU — 203

DISPLAY UNIT — 204

COMMUNICATION UNIT — 205

350

## FIG. 3

## EXISTING OPERATION PLAN INFORMATION TABLE T100

| TRANSPORTATION LEG ID | TRAIN ID | DEPARTURE STATION ID | ARRIVAL STATION ID | DEPARTURE TIME | ARRIVAL TIME | CAPACITY |
|---|---|---|---|---|---|---|
| 0 | tr-1012-001 | 1 | 2 | 08:03 | 08:05 | 2208 |
| 1 | tr-1012-001 | 2 | 3 | 08:06 | 08:11 | 2208 |
| 2 | tr-1012-001 | 3 | 4 | 08:12 | 08:20 | 2208 |
| 3 | tr-1012-001 | 4 | 5 | 08:21 | 08:34 | 2208 |
| 4 | tr-1012-001 | 5 | 6 | 08:35 | 08:50 | 2208 |
| 5 | tr-1012-001 | 6 | 7 | 08:51 | 09:05 | 2208 |
| 6 | tr-1012-001 | 7 | 8 | 09:06 | 09:15 | 2208 |

## FIG. 4

## MAINTENANCE INFORMATION TABLE T200

| TRAIN ID | FLEET STATE | ARRIVAL STATION ID | TRAVELING DISTANCE (UNITS OF 1000 km) | CONTENT OF MAINTENANCE |
|---|---|---|---|---|
| tr-1012 -001 | NEW | 3 | 500 | INSPECTION |
| tr-1012 -032 | OLD | 13 | 1440 | INSPECTION |
| tr-1012 -100 | NEW | 13 | 360 | EXAMINATION |
| tr-1012 -232 | OLD | 5 | 1500 | EXAMINATION |
| ... | ... | ... | ... | ... |

FIG. 5

## CANCELLATION RULE INFORMATION TABLE T300

| RULE NUMBER | CANCELLATION RULE | CANCELLATION POSSIBILITY | CANCELLATION TARGET |
|---|---|---|---|
| RC1 | TRANSPORTATION LEG USING STATION PROVIDED WITH STOPPING PLACE (TEMPORARY TRAIN SERVICE, RAIL YARD) | CANCELLATION IS POSSIBLE | STATION ID: [1, 5, 13, ...] |
| RC2 | TRANSPORTATION LEG CONNECTED TO TRANSPORTATION LEG THAT CAN BE CANCELED BY RC1 | CANCELLATION IS POSSIBLE | TRANSPORTATION LEG ID: [1, 3, 4, ...] |
| ... | ... | ... | ... |
| RU3 | TRANSPORTATION LEG PASSING SPECIAL OPERATION SECTION (HIGH DEMAND, TRIP CAMPAIGN, TOURISM EVENT) | CANCELLATION IS NOT POSSIBLE | STATION ID: [7, 8, 9, ...] PERIOD: [9:00 TO 10:00,] |
| RU4 | FIRST TRAIN, LAST TRAIN, STOPOVER TRAIN | CANCELLATION IS NOT POSSIBLE | TRANSPORTATION LEG ID: [1, 3, 4, ...] |
| ... | ... | ... | ... |

# FIG. 6

## TRAVEL PREFERENCE INFORMATION TABLE T400

| PREFERENCE ID | TRAVEL PREFERENCE |
|---|---|
| B1 | TRANSPORTATION LEG WITH SHORTEST TRAVELING TIME |
| B2 | TRANSPORTATION LEG WITH LOW CONGESTION |
| B3 | MOST RELIABLE (WITH LOW POSSIBILITY OF CANCELLATION AND DELAY) TRANSPORTATION LEG |
| ... | ... |

## TRAVEL PREFERENCE INFORMATION TABLE T410

| PREFERENCE ID | TRANSPORTATION LEG UTILIZATION CONDITION | TRANSPORTATION LEG GIVING-UP CONDITION |
|---|---|---|
| B1 | IN CASE WHERE IT IS POSSIBLE TO ARRIVE AT DESTINATION BEFORE PREDETERMINED CLOCK TIME | IN CASE WHERE IT IS NOT POSSIBLE TO ARRIVE AT DESTINATION BEFORE PREDETERMINED CLOCK TIME |
| B2 | IN CASE WHERE CONGESTION RATE IS LESS THAN PREDETERMINED CONGESTION RATE | IN CASE WHERE CONGESTION RATE IS EQUAL TO OR GREATER THAN PREDETERMINED CONGESTION RATE |
| B3 | IN CASE WHERE IT IS POSSIBLE TO ARRIVE AT DESTINATION WITHIN PREDETERMINED NUMBER OF TRANSFERS | IN CASE WHERE IT IS NOT POSSIBLE TO ARRIVE AT DESTINATION WITHIN PREDETERMINED NUMBER OF TRANSFERS, IN CASE OF BAD WEATHER, AND IN CASE WHERE POSSIBILITY OF CANCELLATION IS HIGH |
| ... | ... | ... |

FIG. 7

PASSENGER TRAVEL PLAN INFORMATION TABLE T500

| TRAVEL PLAN ID | DEPARTURE TIME | DEPARTURE STATION ID | ARRIVAL STATION ID | NUMBER OF PASSENGERS |
|---|---|---|---|---|
| 0 | 05:00 | 1 | 2 | 17 |
| 1 | 05:00 | 1 | 3 | 7 |
| 2 | 05:00 | 1 | 4 | 21 |
| 3 | 05:00 | 1 | 5 | 62 |
| 4 | 05:00 | 1 | 6 | 17 |
| 5 | 05:00 | 1 | 7 | 6 |
| … | … | … | … | … |

## FIG. 8

### TRANSPORTATION LEG NETWORK INFORMATION TABLE T600

| TRAVEL ROUTE ID | DEPARTURE TIME | DEPARTURE STATION ID | STARTING POINT NODE ID | ARRIVAL STATION ID | ARRIVAL POINT NODE ID | NUMBER OF PASSENGERS |
|---|---|---|---|---|---|---|
| 0 | 05:00 | 1 | s_0 | 2 | t_0 | 17 |
| 1 | 05:00 | 1 | s_1 | 3 | t_1 | 7 |
| 2 | 05:00 | 1 | s_2 | 4 | t_2 | 21 |
| 3 | 05:00 | 1 | s_3 | 5 | t_3 | 62 |
| 4 | 05:00 | 1 | s_4 | 6 | t_4 | 17 |
| ... | ... | ... | ... | ... | ... | ... |

### TRANSPORTATION LEG NETWORK INFORMATION TABLE T610

| TRANSPORTATION LEG ID | TRANSPORTATION LEG NODE ID | TRAIN ID | DEPARTURE STATION ID | ARRIVAL STATION ID | DEPARTURE TIME | ARRIVAL TIME | CAPACITY |
|---|---|---|---|---|---|---|---|
| 0 | tn_0 | tr-1012-001 | 1 | 2 | 08:03 | 08:05 | 2208 |
| 1 | tn_1 | tr-1012-001 | 2 | 3 | 08:06 | 08:11 | 2208 |
| 2 | tn_2 | tr-1012-001 | 3 | 4 | 08:12 | 08:20 | 2208 |
| 3 | tn_3 | tr-1012-001 | 4 | 5 | 08:21 | 08:34 | 2208 |
| 4 | tn_4 | tr-1012-001 | 5 | 6 | 08:35 | 08:50 | 2208 |
| 5 | tn_5 | tr-1012-001 | 6 | 7 | 08:51 | 09:05 | 2208 |
| ... | ... | ... | ... | ... | ... | ... | ... |

## FIG. 9

### TRANSPORTATION LEG CANCELLATION POSSIBILITY INFORMATION TABLE T700

| TRANSPORTATION LEG ID | TRANSPORTATION LEG NODE ID | TRAIN ID | CANCELLATION POSSIBILITY | CANCELLATION RULE ID |
|---|---|---|---|---|
| 0 | tn_0 | tr-1012-001 | CANCELLATION IS NOT POSSIBLE | R4 |
| 1 | tn_1 | tr-1012-001 | CANCELLATION IS NOT POSSIBLE | R4 |
| 2 | tn_2 | tr-1012-001 | CANCELLATION IS NOT POSSIBLE | R4 |
| 3 | tn_3 | tr-1012-001 | CANCELLATION IS POSSIBLE | R1 |
| 4 | tn_4 | tr-1012-001 | CANCELLATION IS POSSIBLE | R2 |
| 5 | tn_5 | tr-1012-001 | CANCELLATION IS POSSIBLE | R1 |
| ... | ... | ... | | |

## FIG. 10

### TRAVEL ROUTE CANDIDATE INFORMATION TABLE T800

| TRAVEL PLAN GROUP ID | DEPARTURE STATION ID | ARRIVAL STATION ID | FIRST TRAVEL ROUTE CANDIDATE | SECOND TRAVEL ROUTE CANDIDATE | THIRD TRAVEL ROUTE CANDIDATE |
|---|---|---|---|---|---|
| 0 | 1 | 2 | tn_0 | tn_10 | tn_20 |
| 1 | 1 | 3 | tn_0 – tn_1 | tn_0 – tn_11 | tn_10 – tn_11 |
| 2 | 1 | 4 | tn_0 – tn_1 – tn_2 | tn_10 – tn_11 – tn_12 | tn_0 – tn_1 – tn_12 |
| ... | ... | ... | ... | ... | ... |

FIG. 11

## NEW OPERATION PLAN INFORMATION TABLE T900

| TRANS PORTA TION LEG ID | TRAIN ID | DEPARTURE STATION ID | ARRIVAL STATION ID | DEPARTURE TIME | ARRIVAL TIME | CAPACITY | CANCELLA TION STATUS | PREDICTED NUMBER OF PASSENGERS |
|---|---|---|---|---|---|---|---|---|
| 0 | tr-1012-001 | 1 | 2 | 08:03 | 08:05 | 2208 | - | 627 |
| 1 | tr-1012-001 | 2 | 3 | 08:06 | 08:11 | 2208 | - | 1546 |
| 2 | tr-1012-001 | 3 | 4 | 08:12 | 08:20 | 2208 | CANCELED | 0 |
| 3 | tr-1012-001 | 4 | 5 | 08:21 | 08:34 | 2208 | CANCELED | 0 |
| 4 | tr-1012-001 | 5 | 6 | 08:35 | 08:50 | 2208 | - | 343 |
| 5 | tr-1012-001 | 6 | 7 | 08:51 | 09:05 | 2208 | - | 2100 |
| 6 | tr-1012-001 | 7 | 8 | 09:06 | 09:15 | 2208 | - | 1534 |
| ... | ... | ... | ... | ... | ... | ... | ... | ... |

FIG. 12

## UNSATISFIED DEMAND INFORMATION TABLE T1000

| TRAVEL ROUTE ID | DEPARTURE TIME | DEPARTURE STATION ID | STARTING POINT CANDIDATE NODE ID | ARRIVAL STATION ID | ARRIVAL POINT CANDIDATE NODE ID | NUMBER OF PASSENGERS | NUMBER OF UNSUPPORTED PASSENGERS |
|---|---|---|---|---|---|---|---|
| 0 | 05:00 | 1 | s_0 | 2 | t_0 | 17 | 1 |
| 1 | 05:00 | 1 | s_1 | 3 | t_1 | 7 | 2 |
| 2 | 05:00 | 1 | s_2 | 4 | t_2 | 21 | 0 |
| 3 | 05:00 | 1 | s_3 | 5 | t_3 | 62 | 0 |
| 4 | 05:00 | 1 | s_4 | 6 | t_4 | 17 | 2 |
| ... | ... | ... | ... | ... | ... | ... | ... |

# FIG. 13

## STATION FACILITY INFORMATION TABLE T1100

| STATION ID | STATION NAME | TRAIN STOPPING FACILITY | TYPE OF FACILITY |
|---|---|---|---|
| 1 | A | 1 | STOPPING PLACE |
| 2 | B | 0 | - |
| 3 | C | 1 | INSPECTION SITE |
| 4 | D | 0 | - |
| 5 | E | 1 | SPARE RAILWAY TRACK |
| ... | ... | ... | ... |

# FIG. 14

## KPI INFORMATION TABLE T1200

| KPI NUMBER | KPI NAME | KPI DETAILS |
|---|---|---|
| (1) | NUMBER OF TRANSPORTATION LEGS | NUMBER OF TRANSPORTATION LEGS IN NEW OPERATION PLAN INFORMATION; THIS AFFECTS OPERATING COSTS. |
| (2) | CONGESTION RATE | RATE OF NUMBER OF PASSENGERS WITH RESPECT TO CAPACITY OF EACH TRANSPORTATION LEG |
| (3) | UNSATISFIED DEMAND | NUMBER OF PASSENGERS FOR WHICH TRANSPORTATION LEGS THAT ARE ADAPTED TO TRAVEL PREFERENCES ARE NOT PRESENT IN NEW OPERATION PLAN INFORMATION |
| ... | ... | ... |

FIG. 15

## OPERATION PLAN CREATION
## PREPARATION PROCESSING 1500

F100 — ( ACTIVATE OPERATION PLAN CREATION DEVICE )

F102 — [ INPUT EXISTING OPERATION PLAN INFORMATION ]

F103 — < IS IT NECESSARY TO CORRECT EXISTING OPERATION PLAN INFORMATION? > — No

Yes

F104 — [ SET KPI TARGET VALUES ]

F105 — [ EXECUTE OPERATION PLAN CREATION PROCESSING ]

F106 — < IS NEW OPERATION PLAN INFORMATION ACCEPTABLE? > — No

Yes

F107 — ( OPERATION PLAN CREATION DEVICE STOPS )

## FIG. 16

# OPERATION PLAN CREATION PROCESSING 1600

F200 ⟶ ( ACTIVATE OPERATION PLAN CREATION APPLICATION )

F201 ⟶ [ ACQUIRE EXISTING OPERATION PLAN INFORMATION FROM STORAGE UNIT ]

F202 ⟶ [ EXECUTE TRANSPORTATION LEG NETWORK INFORMATION CREATION PROCESSING ]

F203 ⟶ [ EXECUTE TRANSPORTATION LEG CANCELLATION POSSIBILITY INFORMATION CREATION PROCESSING ]

F204 ⟶ [ EXECUTE TRAVEL ROUTE CANDIDATE INFORMATION CREATION PROCESSING ]

F205 ⟶ [ ACQUIRE KPI TARGET VALUES ]

F206 ⟶ [ EXECUTE PEOPLE FLOW PREDICTION INFORMATION CREATION PROCESSING ]

F207 ⟶ [ EXECUTE NEW OPERATION PLAN INFORMATION CREATION PROCESSING ]

F208 ⟶ [ EXECUTE EVALUATION AND VISUALIZATION PROCESSING ]

F209 ⟶ ⟨ DOES NEW OPERATION PLAN INFORMATION SATISFY KPI TARGET VALUES? ⟩ No

Yes

F210 ⟶ ( END OPERATION PLAN CREATION APPLICATION )

## FIG. 17

# TRANSPORTATION LEG NETWORK INFORMATION CREATION PROCESSING 1700

F300 — ( ACTIVATE TRANSPORTATION LEG NETWORK GENERATION UNIT )

F301 — | ACQUIRE EXISTING OPERATION PLAN INFORMATION FROM STORAGE UNIT |

F302 — | CONVERT TRANSPORTATION LEG ID INTO TRANSPORTATION LEG NODE IN NETWORK GRAPH |

F303 — | ALLOCATE RESTRICTION TO EACH TRANSPORTATION LEG NODE |

F304 — | ACQUIRE PASSENGER TRAVEL PLAN INFORMATION FROM STORAGE UNIT |

F305 — | GROUP PASSENGER TRAVEL PLAN INFORMATION FOR EACH PREDETERMINED TIME INTERVAL |

F306 — | CONVERT DEPARTURE STATION ID INTO STARTING POINT NODE IN NETWORK GRAPH |

F307 — | CONVERT ARRIVAL STATION ID INTO ARRIVAL POINT NODE IN NETWORK GRAPH |

F308 — | APPLY EDGE BETWEEN TRANSPORTATION LEG NODES IN NETWORK GRAPH |

F309 — | APPLY EDGE AMONG STARTING POINT NODE, TRANSPORTATION LEG NODE, AND ARRIVAL POINT NODE IN NETWORK GRAPH |

F310 — | STORE CREATED NETWORK GRAPH AS TRANSPORTATION LEG NETWORK INFORMATION IN STORAGE UNIT |

F311 — ( CAUSE TRANSPORTATION LEG NETWORK GENERATION UNIT TO END )

FIG. 18

TRANSPORTATION LEG CANCELLATION POSSIBILITY
INFORMATION CREATION PROCESSING 1800

F400 — ( ACTIVATE CANCELLATION DETERMINATION UNIT )

F401 — ACQUIRE TRANSPORTATION LEG NETWORK INFORMATION, MAINTENANCE INFORMATION, AND CANCELLATION RULE INFORMATION FROM STORAGE UNIT

F402 — DEFINE GROUP OF NODES THAT CAN BE CANCELED AND GROUP OF NODES THAT CANNOT BE CANCELED

F403 — START NODE SEARCHING

F404 — ADD NODE THAT CAN BE CANCELED BY CANCELLATION RULE TO GROUP OF NODES THAT CAN BE CANCELED

F405 — ADD NODE THAT CANNOT BE CANCELED BY CANCELATION RULE TO GROUP OF NODES THAT CANNOT BE CANCELED

F406 — END NODE SEARCHING

F407 — ADD STARTING POINT NODE AND ARRIVAL POINT NODE TO GROUP OF NODES THAT CANNOT BE CANCELED

F408 — ADD NODES OF REMAINING TRANSPORTATION LEGS TO GROUP OF NODES THAT CAN BE CANCELED

F409 — DETERMINE GROUP OF NODES THAT CAN BE CANCELED AND GROUP OF NODES THAT CANNOT BE CANCELED AS TRANSPORTATION LEG CANCELLATION POSSIBILITY INFORMATION AND STORE TRANSPORTATION LEG CANCELLATION POSSIBILITY INFORMATION IN STORAGE UNIT

F410 — ( CAUSE CANCELLATION DETERMINATION UNIT TO END )

## FIG. 19

### TRAVEL ROUTE CANDIDATE INFORMATION GENERATION PROCESSING 1900

F500 — ( ACTIVATE TRAVEL ROUTE CANDIDATE DETERMINATION UNIT )

F501 — ACQUIRE TRANSPORTATION LEG NETWORK INFORMATION AND PASSENGER TRAVEL PLAN INFORMATION FROM STORAGE UNIT

F502 — SPECIFY ALL AVAILABLE TRAVEL ROUTES BETWEEN PAIRS OF STARTING POINT NODES AND ARRIVAL POINT NODES IN TRANSPORTATION LEG NETWORK

F503 — ACQUIRE TRAVEL PREFERENCE INFORMATION FROM STORAGE UNIT

F504 — DETERMINE TRAVEL ROUTES ADAPTED TO TRAVEL PREFERENCE INFORMATION AS TRAVEL ROUTE CANDIDATES FROM AMONG ALL SPECIFIED TRAVEL ROUTES

F505 — ARE TRAVEL ROUTE CANDIDATES ADAPTED TO TRAVEL PREFERENCE INFORMATION PRESENT? — No → F506 DETERMINE AVAILABLE TRAVEL ROUTES AS TRAVEL ROUTE CANDIDATES

Yes

F507 — DETERMINE TRAVEL ROUTE CANDIDATES ADAPTED TO TRAVEL PREFERENCE INFORMATION AS TARGETS OF PEOPLE FLOW PREDICTION

F508 — STORE DETERMINED TRAVEL ROUTE CANDIDATE INFORMATION IN STORAGE UNIT

F509 — ( END TRAVEL ROUTE CANDIDATE DETERMINATION UNIT )

## FIG. 20

## PEOPLE FLOW PREDICTION INFORMATION CREATION PROCESSING 2000

F600 — ( ACTIVATE PEOPLE FLOW PREDICTION UNIT )

F601 — ACQUIRE TRANSPORTATION LEG NETWORK INFORMATION AND TRAVEL ROUTE CANDIDATE INFORMATION FROM STORAGE UNIT

F602 — UPDATE TRANSPORTATION LEG NETWORK INFORMATION ON BASIS OF TRAVEL ROUTE CANDIDATE INFORMATION

F603 — SET PEOPLE FLOW RESTRICTION ON BASIS OF TRAVEL ROUTE CANDIDATE INFORMATION

F604 — GENERATE PEOPLE FLOW PREDICTION INFORMATION THAT INDICATES PREDICTED NUMBER OF PASSENGERS FOR EACH TRAVEL ROUTE CANDIDATE BY SIMULATING PEOPLE FLOW IN TRANSPORTATION LEG NETWORK

F605 — GENERATE UNSATISFIED DEMAND INFORMATION ON BASIS OF PEOPLE FLOW PREDICTION INFORMATION AND PASSENGER TRAVEL PLAN INFORMATION

F606 — STORE PEOPLE FLOW PREDICTION INFORMATION AND UNSATISFIED DEMAND INFORMATION IN STORAGE UNIT

F607 — ( CAUSE PEOPLE FLOW PREDICTION UNIT TO END )

## FIG. 21

### NEW OPERATION PLAN INFORMATION CREATION PROCESSING 2100

F700 — ACTIVATE OPERATION PLAN CREATION UNIT

F701 — ACQUIRE TRANSPORTATION LEG NETWORK INFORMATION, TRANSPORTATION LEG CANCELLATION POSSIBILITY INFORMATION, UNSATISFIED DEMAND INFORMATION, AND PEOPLE FLOW PREDICTION INFORMATION FROM STORAGE UNIT

F702 — SET PARAMETERS FOR SOLVER

F703 — SET RESTRICTIONS FOR SOLVER

F704 — ACQUIRE KPI TARGET VALUES

F705 — PERFORM ANALYSIS BY SOLVER

F706 — GENERATE NEW OPERATION PLAN INFORMATION ON BASIS OF RESULT OF SOLVER AND STORE NEW OPERATION PLAN INFORMATION IN STORAGE UNIT

F707 — END OPERATION PLAN CREATION UNIT

FIG. 22

EVALUATION AND VISUALIZATION
PROCESSING 2200

F800 — ACTIVATE EVALUATION AND VISUALIZATION PROCESSING UNIT

F801 — ACQUIRE NEW OPERATION PLAN INFORMATION

F802 — EVALUATE KPIS IN NEW OPERATION PLAN INFORMATION

F803 — GENERATE AND PRESENT RESULT OF EVALUATING NEW OPERATION PLAN INFORMATION

F804 — END EVALUATION AND VISUALIZATION PROCESSING UNIT

FIG. 23

KPI SETTING INTERFACE 2300

G101

| MODE MENU | KPI SETTING \| ▼ | | G103 |

KPI SETTING WINDOW

| SELECT | KPI | CURRENT VALUE | TARGET VALUE | ▲ |
|--------|-----|---------------|--------------|---|
| ◉ | (1) NUMBER OF TRANSPORTATION LEGS | 100% | 90% | |
| ◉ | (2) CONGESTION RATE | 250% | 200% | |
| ◉ | (3) UNSATISFIED DEMAND | 10% | 5% | |
| ... | ... | ... | ... | ▼ |

| SAVE IN FILE | | COMPLETE | CANCEL |

G105                    G107        G109

## FIG. 24

### EXISTING OPERATION PLAN INFORMATION EVALUATION RESULT INTERFACE 2400

G200

G201

**MODE MENU | DISPLAY RESULT | ▼**

**EXISTING OPERATION PLAN INFORMATION**

**NEW OPERATION PLAN INFORMATION**

TRAIN DIAGRAM DISPLAY WINDOW

G202

G203

CANCELED TRANSPORTATION LEG

[..........]

STATION

CONGESTION RATE — min% ——— max%

A

B

C

...

08:00

TIME

NONE
NONE
NONE
NONE
NONE
...

KPI DISPLAY — G204

KPI CONFIGURATION SETTING

| KPI(1): % OF ORIGINAL KPI | KPI(2): % OF ORIGINAL KPI | KPI(2): % OF ORIGINAL KPI |

KPI (1) 100% G205

KPI (2) 250%

KPI (3) 10%

| KPI RESULT | |
|---|---|
| KPI (1) | 100% |
| KPI (2) | 250% |
| KPI (3) | 10% |
| ... | ... |

**EXISTING OPERATION PLAN DISPLAY WINDOW**  G206

| TRANS PORTA TION LEG ID | TRAIN ID | DEPARTURE STATION ID | ARRIVAL STATION ID | DEPARTURE TIME | ARRIVAL TIME | CAPACITY | NUMBER OF PASSENGERS |
|---|---|---|---|---|---|---|---|
| 0 | tr-1012-001 | 1 | 2 | 08:03 | 08:05 | 2208 | 1400 |
| 1 | tr-1012-001 | 2 | 3 | 08:06 | 08:11 | 2208 | 2480 |
| 2 | tr-1012-001 | 3 | 4 | 08:12 | 08:20 | 2208 | 1324 |
| 3 | tr-1012-001 | 4 | 5 | 08:21 | 08:34 | 2208 | 2000 |
| 4 | tr-1012-001 | 5 | 6 | 08:35 | 08:50 | 2208 | 2500 |
| 5 | tr-1012-001 | 6 | 7 | 08:51 | 09:05 | 2208 | 2430 |
| ... | ... | ... | ... | ... | ... | ... | ... |

| SAVE IN FILE | DISPLAY NEW OPERATION PLAN |

G208

G210

## FIG. 25

NEW OPERATION PLAN INFORMATION
EVALUATION RESULT INTERFACE 2500

G301

| MODE MENU | DISPLAY RESULT | ▼ |

| EXISTING OPERATION PLAN INFORMATION | NEW OPERATION PLAN INFORMATION | G302 |

**TRAIN DIAGRAM DISPLAY WINDOW** — G303

STATION

CONGEST min% — — — max%
ION RATE

A
B
C
...

08:00 → TIME

CANCELED TRANSPORT ATION LEG

tn_1
tn_10
tn_12
tn_13
tn_24
...

**KPI DISPLAY** — G304

KPI CONFIGURATION SETTING

| KPI (1): 90% | KPI (2): 200% | KPI (2): 5% |

KPI (1) G305
100%

KPI (2) 250%    KPI (3) 10%

| KPI RESULT | |
|---|---|
| KPI (1) | 90% |
| KPI (2) | 210% |
| KPI (3) | 6% |
| ... | ... |

**NEW OPERATION PLAN DISPLAY WINDOW** — G306

| TRANS PORTA TION LEG ID | TRAIN ID | DEPARTURE STATION ID | ARRIVAL STATION ID | DEPARTURE TIME | ARRIVAL TIME | CAPACITY | CANCELLA-TION STATE | NUMBER OF PASSENGERS |
|---|---|---|---|---|---|---|---|---|
| 0 | tr-1012-001 | 1 | 2 | 08:03 | 08:05 | 2208 | - | 627 |
| 1 | tr-1012-001 | 2 | 3 | 08:06 | 08:11 | 2208 | - | 1546 |
| 2 | tr-1012-001 | 3 | 4 | 08:12 | 08:20 | 2208 | CANCELED | 0 |
| 3 | tr-1012-001 | 4 | 5 | 08:21 | 08:34 | 2208 | CANCELED | 0 |
| 4 | tr-1012-001 | 5 | 6 | 08:35 | 08:50 | 2208 | - | 343 |
| 5 | tr-1012-001 | 6 | 7 | 08:51 | 09:05 | 2208 | - | 2100 |
| ... | ... | ... | ... | ... | ... | ... | ... | ... |

| SAVE IN FILE | RETURN TO KPI SETTING | DISPLAY TRAVEL ROUTE CANDIDATE INFORMATION |

G308    G310    G312

## FIG. 26
### TRAVEL ROUTE CANDIDATE INFORMATION EVALUATION RESULT INTERFACE 2600

MODE MENU | DISPLAY TRANSPORTATION LEG | ▼ ～⌁ G401

| TRAVEL PREFERENCE SETTING WINDOW G (ALL) | B1 (SHORTEST PATH) ～⌁ G402 |
|---|---|
| FILTER SETTING DISPLAY WINDOW ～⌁ G403 | |
| DEPARTURE STATION | STATION A | ▼ |
| ARRIVAL STATION | STATION D | ▼ |
| DEPARTURE CLOCK TIME | 08:00 | ▼ |
| ARRIVAL CLOCK TIME | 08:30 | ▼ |

G404

**DISPLAY RESULT**

～ G406

TRAVEL ROUTE CANDIDATE WINDOW | ALL RESULTS | FILTER

KPI DISPLAY | ALL RESULTS | FILTER

PASSENGER GROUP 3 | ▼ ＼ G405

G408
TRAVEL ROUTE CANDIDATE
[ ▬ ]
tn_1
tn_10
tn_12
tn_13
tn_24
...

STATION
～ G409   G407

PASSENGER GROUP 3 | ▼ ／ G410

TRAVEL ROUTE UTILIZATION RATE

A (30) (30)
B (30) (30)
C (30) (20) (30)
... (30) (30)

100%
80%
60%
40%
20%
0%

EXISTING OPERATION PLAN | NEW OPERATION PLAN (1) | NEW OPERATION PLAN (2)

08:00    08:30    TIME

**ALL TRAVEL ROUTES**    FILTERED TRAVEL ROUTES ＼ G412

G411

| TRANSPORTATION LEG ID | TRAIN ID | CANCELLATION STATUS | NUMBER OF PASSENGERS |
|---|---|---|---|
| 1 | TR-1012-001 | - | 867 |
| 2 | TR-1012-001 | - | 1600 |
| 3 | TR-1012-001 | CANCELED | 0 |
| 4 | TR-1012-002 | - | 580 |
| 5 | TR-1012-002 | - | 796 |
| ... | ... | ... | ... |

**TRAVEL ROUTE CANDIDATE INFORMATION WINDOW** ～⌁ G413

| TRAVEL ROUTE GROUP ID | DEPARTURE STATION ID | ARRIVAL STATION ID | FIRST TRAVEL ROUTE CANDIDATE | SECOND TRAVEL ROUTE CANDIDATE | THIRD TRAVEL ROUTE CANDIDATE |
|---|---|---|---|---|---|
| 1 | 1 | 2 | TRANSPORTATION LEG 1 | TRANSPORTATION LEG 4 | TRANSPORTATION LEG 7 |
| 2 | 1 | 3 | TRANSPORTATION LEG 1-TRANSPORTATION LEG 2 | TRANSPORTATION LEG 1-TRANSPORTATION LEG 5 | TRANSPORTATION LEG 2-TRANSPORTATION LEG 5 |
| 3 | 1 | 4 | TRANSPORTATION LEG 1-TRANSPORTATION LEG 2-TRANSPORTATION LEG 3 | TRANSPORTATION LEG 4-TRANSPORTATION LEG 5-TRANSPORTATION LEG 6 | TRANSPORTATION LEG 1-TRANSPORTATION LEG 2-TRANSPORTATION LEG 6 |
| ... | ... | ... | ... | ... | ... |

G414 ～⌁ SAVE IN FILE    G415 ～⌁ END ANALYSIS

# FIG. 27

## DATA FLOW 2700

FIG. 28

TIME-DISTANCE DIAGRAM 2800

FIG. 29

TRANSPORTATION LEG NETWORK GRAPH 2900

**EP 4 566 912 A1**

# INTERNATIONAL SEARCH REPORT

| International application No. |
|---|
| **PCT/JP2023/027782** |

| A. | CLASSIFICATION OF SUBJECT MATTER |
|---|---|

*B61L 27/12*(2022.01)i; *G06Q 50/30*(2012.01)i; *G08G 1/123*(2006.01)i
FI:    B61L27/12; G08G1/123 A; G06Q50/30

According to International Patent Classification (IPC) or to both national classification and IPC

| B. | FIELDS SEARCHED |
|---|---|

Minimum documentation searched (classification system followed by classification symbols)

B61L27/12; G06Q50/30; G08G1/123

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2015-184779 A (HITACHI, LTD.) 22 October 2015 (2015-10-22) paragraphs [0009]-[0160], fig. 1-36 | 1-10 |
| A | JP 2017-105274 A (RAILWAY TECHNICAL RESEARCH INSTITUTE) 15 June 2017 (2017-06-15) paragraph [0060], fig. 15 | 1-10 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 October 2023** | **17 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/027782**

| Patent document cited in search report | | | Publication date (day/month/year) | Patent family member(s) | Publication date (day/month/year) |
|---|---|---|---|---|---|
| JP | 2015-184779 | A | 22 October 2015 | (Family: none) | |
| JP | 2017-105274 | A | 15 June 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019073146 A